# EUROPEAN PATENT APPLICATION

(11) **EP 4 510 613 A1**
(43) Date of publication of application: **19.02.2025**
(21) Application number: 22957203.7
(22) Date of filing: 01.12.2022
(51) Int. Cl.: H04R 1/10, H04R 25/00

(54) **EARPHONE**

(30) Priority: 31.08.2022 WO PCT/CN2022/116220
(71) Applicant: Shenzhen Shokz Co., Ltd., Shenzhen, Guangdong 518108 (CN)
(72) Inventor: ZHANG, Haofeng, Shenzhen, Guangdong 518108 (CN); ZHENG, Zeying, Shenzhen, Guangdong 518108 (CN); XU, Jiang, Shenzhen, Guangdong 518108 (CN); WU, Duoduo, Shenzhen, Guangdong 518108 (CN)
(74) Representative: Wang, Bo
(86) International application number: PCT/CN2022/136041
(87) International publication number: WO 2024/045391

(57) **Abstract**

Provided is an earphone. The earphone includes a core module and a hook-like structure connected to the core module. The core module has a connecting end connected to the hook-like structure and a free end not connected to the hook-like structure. The core module is located on a front side of an ear in a wearing state and the free end extends into a cavum conchae of the ear. At least a portion of the hook-like structure is located on a rear side of the ear in the wearing state, and the core module and the hook-like structure jointly clamp an ear region corresponding to the cavum conchae from a front side and a rear side of the ear region, which increases the resistance against the earphone falling off the ear, thereby improving the stability of the earphone during wear.

## Description

### CROSS-REFERENCE TO RELATED APPLICATIONS

This application claims priority to International Patent Application No. PCT/CN2022/116220, filed on August 31, 2022, entitled "AN EARPHONE," the entire contents of which are incorporated herein by reference.

### TECHNICAL FIELD

The present disclosure relates to the field of electronic devices, and in particular relates to earphones.

### BACKGROUND

With the continuous popularization of electronic devices, electronic devices have become indispensable social and entertainment tools in people's daily lives. Electronic devices such as earphones have also been widely used in people's daily lives. The electronic devices may be used in conjunction with terminal devices such as cell phones, computers, etc. to provide an auditory feast for users. According to working principles of earphones, they may generally be divided into air-conducting earphones and bone-conducting earphones. Based on the ways users wear earphones, they may be categorized as over-ear earphones, on-ear earphones, and in-ear earphones. Furthermore, based on interaction modes between earphones and electronic devices, earphones may be classified as wired earphones and wireless earphones.

### SUMMARY

The present disclosure provides an earphone. The earphone includes a core module and a hook-like structure connected to the core module, wherein the core module has a connecting end connected to the hook-like structure and a free end not connected to the hook-like structure, the core module is located on a front side of an ear in a wearing state and the free end extends into a cavum conchae of the ear, at least a portion of the hook-like structure is located on a rear side of the ear in the wearing state, and the core module and the hook-like structure jointly clamp an ear region corresponding to the cavum conchae from a front side and a rear side of the ear region.

In some embodiments, in the wearing state, the core module has an inner side surface facing toward the ear in a thickness direction of the core module, an outer side surface facing away from the ear in the thickness direction of the core module, and a connecting surface connecting the inner side and the outer side surface, the thickness direction of the core module being defined as a direction in which the core module is close to or away from the ear when the core module is in the wearing state. At least a portion of the connecting surface is disposed in the cavum conchae in the wearing state and forms a first contact zone with the front side of the ear region, the hook-like structure forms a second contact zone with the rear side of the ear region in the wearing state, and the second contact zone and the first contact zone at least partially overlap in an ear thickness direction of the ear.

In some embodiments, the core module has a length direction and a width direction that are perpendicular to the thickness direction of the core module and orthogonal to each other. A length of the core module in the length direction is greater than a length of the core module in the width direction, and a positive projection of the hook-like structure on a reference plane perpendicular to the length direction partially overlaps with a positive projection of the free end of the hook-like structure on the reference plane.

In some embodiments, an overlapping region formed by the positive projection of the hook-like structure on the reference plane and the positive projection of the free end of the hook-like structure on the reference plane is located between the inner side surface and the outer side surface of the core module in the thickness direction of the core module.

In some embodiments, the hook-like structure includes an elastic metal wire connected to the core module and a battery housing connected to an end of the elastic metal wire that is away from the core module. A battery is provided in the battery housing, the battery is coupled to the core module, and a positive projection of the battery housing on the reference plane partially overlaps with a positive projection of the free end of the hook-like structure on the reference plane.

In some embodiments, the core module has a thickness direction, a length direction, and a width direction that are orthogonal to each other, the thickness direction is defined as a direction in which the core module is close to or away from the ear when the core module is in the wearing state. A length of the core module in the length direction is greater than a length of the core module in the width direction. The core module in the wearing state has an upper side surface facing away from an external ear canal of the ear in the width direction and a lower side surface facing toward the external ear canal of the ear in the width direction. An edge of a side, facing toward the core module, of a positive projection of the hook-like structure on a reference plane that is perpendicular to the thickness direction is divided into a first section and a second section with a continuous arc transition. A dividing point between the first section and the second section is located at a position where the edge is farthest from the upper side surface of the core module in the width direction, and an overall curvature of the hook-like structure in the first section is greater than an overall curvature of the hook-like structure in the second section.

In some embodiments, a length of the second section is greater than a length of the first section in an extension direction of the hook-like structure.

In some embodiments, the earphone has a first reference line segment parallel to the width direction. A starting point of the first reference line segment is a point where the first reference line segment intersects with the upper side surface, an ending point of the first reference line segment is the dividing point, and a length of first reference line segment is in a range of 13mm to 20mm.

In some embodiments, a second reference line segment passing 1/4 of the first reference line segment and parallel to the length direction intersects with the first section and the second section at a first intersection point and a second intersection point, respectively. A distance between the first intersection point and the starting point of the first reference line segment is in a range of 9mm to 15mm, and a distance between the second intersection point and the starting point of the first reference line segment is in a range of 12mm to 19mm.

A third reference line segment passing 1/2 of the first reference line segment and parallel to the length direction intersects with the first section and the second section at a third intersection point and a fourth intersection point, respectively. A distance between the third intersection point and the starting point of the first reference line segment is in a range of 11mm to 18mm, and a distance between the fourth intersection point and the starting point of the first reference line segment is in a range of 12mm to 19mm.

A fourth reference line segment passing 3/4 of the first reference line segment and parallel to the length direction intersects with the first section and the second section at a fifth intersection point and a sixth intersection point, respectively. A distance between the fifth intersection point and the starting point of the first reference line segment is in a range of 12mm to 19mm, and a distance between the sixth intersection point and the starting point of the first reference line segment is in a range of 12mm to 19mm.

In some embodiments, the core module has a rear side surface connecting the upper side surface and the lower side surface. The rear side surface is located at an end of the core module that faces a rear side of a head in the length direction when the core module is in the wearing state and at least partially located in the cavum conchae. A fifth reference line segment with a shortest distance in the length direction is formed between the second section and the rear side surface, and a length of the fifth reference line segment is in a range of 2 mm to 3 mm.

In some embodiments, a point where the fifth reference line segment intersects with the rear side surface is designated as a starting point of the fifth reference line segment, and a point where the fifth reference line segment intersects with the second section is designated as an end point of the fifth reference line segment.

The earphone has a first reference line segment parallel to the width direction, a starting point of the first reference line segment is a point where the first reference line segment intersects with the upper side surface, and an end point of the first reference line segment is the dividing point. A positive projection of the starting point of the first reference line segment along the length direction of the core module intersects with the second section at a seventh intersection point. A positive projection of an intersection point of a reverse extension line of the first reference line segment and the lower side surface along the length direction intersects with the second section at an eighth intersection point. A distance between the seventh intersection point and the starting point of the fifth reference line segment is in a range of 5mm and 9mm, and a distance between the eighth intersection point and the starting point of the fifth reference line segment is in a range of 5mm to 9mm.

In some embodiments, the core module has a thickness direction, a length direction, and a width direction that are orthogonal to each other, the thickness direction is defined as a direction in which the core module is close to or away from the ear when the core module is in the wearing state. A length of the core module in the length direction is greater than a width of the core module in the width direction. In the wearing state and viewed along a direction of a coronal axis of a human body, the connecting end is closer to a top of a head than the free end, and an angle between the length direction and a direction of a sagittal axis of the human body is in a range of 15° to 60°.

In some embodiments, the core module includes a core housing connected with the hook-like structure and a speaker provided in the core housing. An inner side surface of the core housing facing the ear when the core module is in the wearing state is provided with an acoustic outlet hole, a sound wave generated by the speaker propagating out through the core housing, and the core module in the wearing state cooperates with the cavum conchae to form an auxiliary cavity in communication with an external ear canal of the ear, the acoustic outlet hole being at least partially disposed in the auxiliary cavity.

In some embodiments, the auxiliary cavity is configured as a semi-open cavity.

In some embodiments, the core module includes a flexible embedding block disposed outside of the core housing, a hardness of the flexible embedding block being less than a hardness of the core housing. The flexible embedding block covers a local region of the core housing corresponding to the free end, and the flexible embedding block acts as a cushion when the core module abuts against the ear region.

In some embodiments, the core module has a thickness direction, a length direction, and a width direction that are orthogonal to each other, the thickness direction is defined as a direction in which the core module is close to or away from the ear when the core module is in the wearing state. A length of the core module in the length direction is greater than a width of the core module in the width direction. The core module in the wearing state has an upper side surface facing away from the external ear canal of the ear in the width direction, a lower side surface facing toward the external ear canal of the ear in the width direction, and a rear side surface that connects the upper side surface and the lower side surface. The rear side surface faces a rear side of a head in the length direction when the core module is in the wearing state and located in the cavum conchae. The flexible embedding block continuously overlies at least a portion of the core housing corresponding to the rear side surface, the upper side surface, and the lower side surface.

In some embodiments, the flexible embedding block is configured as a U-shape when viewed in the thickness direction.

In some embodiments, a portion of the flexible embedding block corresponding to the lower side surface abuts against an antitragus of the ear.

The beneficial effects of the present disclosure include: compared to related technologies, the earphone of the present disclosure allows the free end of the core module to extend into the cavum conchae, and the core module and the hook-like structure can jointly clamp the ear region corresponding to the cavum conchae from the front side and the rear side of the ear region. This configuration increases the resistance against the earphone falling off the ear, thereby improving the stability of the earphone during wear.

### BRIEF DESCRIPTION OF THE DRAWINGS

In order to more clearly illustrate the technical solutions in the embodiments of the present application, the drawings required for use in the description of the embodiments will be briefly introduced below. Obviously, the drawings described below are only some embodiments of the present application. For ordinary technicians in this field, other drawings can be obtained based on these drawings without paying any creative work.
FIG. 1 is a schematic diagram of a profile of a front side of an ear of a user according to some embodiments of the present disclosure;
FIG. 2 is a schematic diagram of an exemplary structure of an earphone according to some embodiments of the present disclosure;
FIG. 3 is a schematic diagram of an exemplary structure of an earphone in a wearing state according to some embodiments of the present disclosure;
FIG. 4 is a schematic diagram of an exemplary structure of an earphone according to some embodiments of the present disclosure;
FIG. 5 is a schematic diagram of an exemplary structure of an earphone according to some embodiments of the present disclosure;
FIG. 6 is a comparative graph of frequency response curves measured at a same listening position when a core module of an earphone is located at different positions of an ear according to some embodiments of the present disclosure;
FIG. 7 is a schematic diagram of a sectional structure of the earphone in FIG. 2 along an A1-A1 sectional direction;
FIG. 8 is a schematic diagram of a sectional structure of the earphone in FIG. 2 along an A2-A2 sectional direction;
FIG. 9 is a schematic diagram of an exemplary structure of an earphone according to some embodiments of the present disclosure;
FIG. 10 is a schematic diagram of an exemplary structure of a core housing according to some embodiments of the present disclosure;
FIG. 11 is a schematic diagram of an exemplary structure of a core housing according to some embodiments of the present disclosure;
FIG. 12 is a schematic diagram of an exemplary structure of a bracket according to some embodiments of the present disclosure;
FIG. 13 is a schematic diagram of an enlarged structure in a B1 region of the earphone in FIG. 8;
FIG. 14 is a schematic diagram of an enlarged structure in a B2 region of the earphone in FIG. 8;
FIG. 15 is a schematic diagram of an exemplary structure of a hook-like structure according to some embodiments of the present disclosure;
FIG. 16 is a schematic diagram of a sectional structure of the hook-like structure in FIG. 15 along an A3-A3 sectional direction;
FIG. 17 is a schematic diagram of a sectional structure of the hook-like structure in FIG. 15 along a sectional direction perpendicular to the A3-A3 sectional direction;
FIG. 18 is a schematic exploded diagram of the hook-like structure in FIG. 15;
FIG. 19 is a schematic diagram of a main view of an exemplary structure of an earphone according to some embodiments of the present disclosure;
FIG. 20 is a schematic diagram of a left view of the earphone in FIG. 19;
FIG. 21 is a schematic diagram of a front side of the earphone in FIG. 19 in a wearing state observed along a coronal axis of a human body;
FIG. 22 is a schematic diagram of a rear side of the earphone in FIG. 19 in the wearing state observed along a sagittal axis of the human body;
FIG. 23 is a schematic diagram of a main view of an exemplary structure of an earphone according to some embodiments of the present disclosure;
FIG. 24 is a schematic diagram of a holding portion of the earphone in FIG. 23 facing a side of an ear;
FIG. 25 is a schematic diagram of a front side of the earphone in FIG. 23 in a wearing state observed along a coronal axis of a human body;
FIG. 26 is a schematic diagram of a main view of an exemplary structure of an earphone according to some embodiments of the present disclosure;
FIG. 27 is a schematic diagram of a holding portion of the earphone in FIG. 26 facing a side of an ear; and
FIG. 28 is a schematic diagram of a front side of the earphone in FIG. 19 in a wearing state observed along a coronal axis of a human body.

### DETAILED DESCRIPTION

The present disclosure is described in further detail below in conjunction with the accompanying drawings and embodiments. In particular, it should be noted that the following embodiments are only used to illustrate the present disclosure, but do not limit the scope of the present disclosure. Similarly, the following embodiments are only some but not all embodiments of the present disclosure, and all other embodiments obtained by a person of ordinary skill in the art without creative labor fall within the scope of protection of the present disclosure.

References to "embodiments" in the present disclosure mean that particular features, structures, or characteristics described in conjunction with embodiments may be included in at least one embodiment of the present disclosure. It may be understood by those of skill in the art, both explicitly and implicitly, that the embodiments described in the present disclosure may be combined with other embodiments.

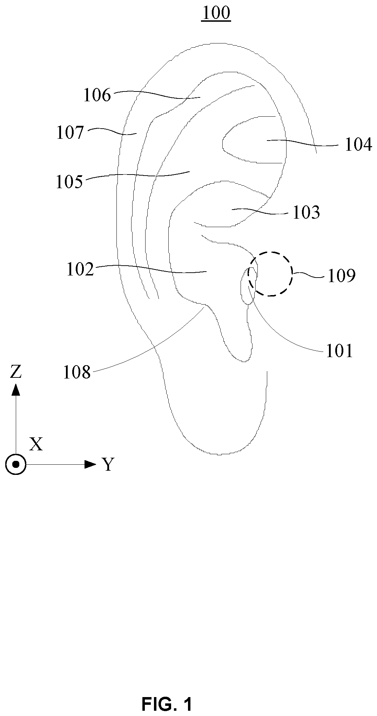

Referring to FIG. 1, an ear 100 of a user may include physiological parts such as an external ear canal 101, a cavum conchae 102, a cymba conchae 103, a triangular fossa 104, an antihelix 105, a scaphoid fossa 106, a helix 107, and an antitragus 108. Although the external ear canal 101 has a certain depth and extends to a tympanic membrane of the ear, for ease of description and referring to FIG. 1, the present disclosure defines the external ear canal 101 as an entrance (i.e., an ear hole) of the ear that is dorsal to the tympanic membrane, unless otherwise specified. Furthermore, physiological parts such as the cavum conchae 102, the cymba conchae 103, the triangular fossa 104, or the like, have a certain volume and a certain depth, and the cavum conchae 102 is in direct communication with the external ear canal 101, which means that the ear hole may be regarded as being located at a bottom of the cavum conchae 102.

Furthermore, the external ear canal 101 of the ear 100 is surrounded by a tragus 109. Compared to physiological parts such as the cavum conchae 102, the cymba conchae 103, and the triangular fossa 104, which have a certain depth and volume in three-dimensional space (i.e., these parts are recessed towards a rear side of the ear along a direction oriented toward the head of a user, the tragus 109 protrudes toward a front side of the ear along a direction facing away from the head of the user. In the present disclosure, the "front side of the ear" is a concept relative to the "rear side of the ear". The front side of the ear refers to a side of the ear that is away from the head, as illustrated in FIG. 1, while the rear side of the ear refers to a side of the ear facing toward the head, both of which are in relation to the ear of the user.

Furthermore, different users may have individual differences, resulting in different shapes, sizes, and other dimensional differences of the ear. For ease of description and to minimize (or even eliminate) individual differences between different users, a simulator (e.g. GRAS 45BC KEMAR) with a head and (left and right) ears may be produced based on the ANSI: S3.36, S3.25 and IEC: 60318-7 standards. Thus, in the present disclosure, expressions such as "the user wears the earphone," "the earphone is in a wearing state," "in the wearing state," etc., refer to the earphone described in the present disclosure being worn on the ears of the aforementioned simulator. Of course, precisely due to individual differences between users, when the earphone is worn by different users, there may be some variation compared to when the earphone is worn on the ears of the aforementioned simulator. However, such differences should be tolerated.

It should be noted that in the fields of medicine, anatomy, or the like, three basic planes of the human body, including a sagittal plane, a coronal plane, and a horizontal plane, and three basic axes, including a sagittal axis, a coronal axis, and a vertical axis, may be defined. The sagittal plane refers to a plane perpendicular to a ground and runs along a front-to-rear direction of the body, which divides the body into a left part and a right part; the coronal plane refers to a plane perpendicular to the ground and runs along a left-to-right direction of the body, which divides the body into an anterior part and a posterior part; and the horizontal plane refers to a plane parallel to the ground and runs along a top-to-bottom direction of the body, which divides the body into an upper part and a lower part. Correspondingly, the sagittal axis is an axis along the front-to-rear direction of the body and perpendicular to the coronal plane, the coronal axis is an axis along the left-to-right direction of the body and perpendicular to the sagittal plane, and the vertical axis is an axis along the top-to-bottom direction of the body and perpendicular to the horizontal plane. Furthermore, the "front side of the ear" described in the present disclosure is a concept relative to the "rear side of the ear," where the "front side of the ear" refers to a side of the ear that is away from the head, and the "rear side of the ear" refers to a side of the ear that is toward the head, both of which are directed to the ear of the user. Observing the ear of the above-described simulator along a direction of the coronal axis of the human body, a schematic diagram of the profile of the front side of the ear as shown in FIG. 1 may be obtained. Based on this, referring to FIG. 1, the X, Y, and Z directions may be simply regarded as the coronal axis, the sagittal axis, and the vertical axis of the human body, respectively; the XY plane, the XZ plane, and the YZ plane may be simply regarded as the horizontal plane, the coronal plane, and the sagittal plane of the human body, respectively.

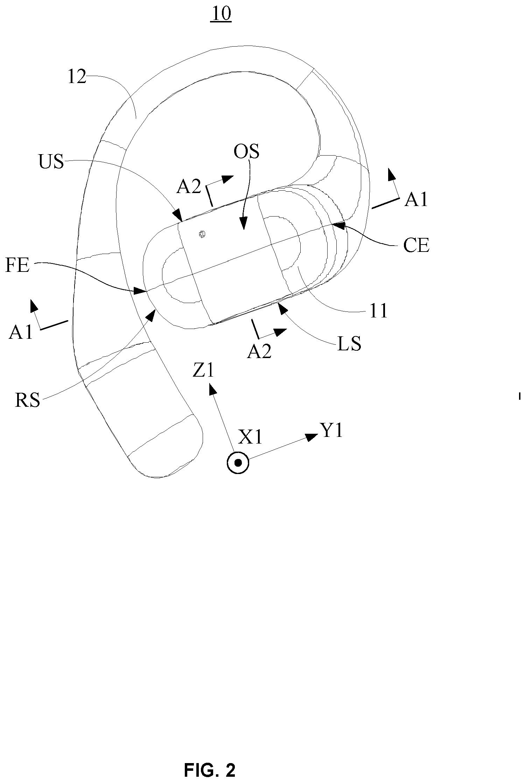

By way of example, referring to FIGs. 2 to 5, an earphone 10 may include a core module 11 and a hook-like structure 12 connected to the core module 11. The core module 11 may be disposed on a front side of an ear of a user in a wearing state, and at least part of the hook-like structure 12 may be disposed on a rear side of the ear in the wearing state to enable the earphone 10 to be disposed on the ear in the wearing state. The core module 11 may have a connecting end (CE) that is connected to the hook-like structure 12 and a free end (FE) that is not connected to the hook-like structure 12. Furthermore, the core module 11 may be configured not to block an external ear canal in the wearing state, making the earphone 10 an "open earphone." It should be noted that, due to individual differences between different users, when the earphone 10 is worn by different users, the core module 11 may partially cover the external ear canal, but the external ear canal remains unblocked.

In order to improve the stability of the earphone 10 in the wearing state, the earphone 10 may be configured in any one of the following ways or a combination thereof. First, at least a portion of the hook-like structure 12 may be configured as a mimetic structure that fits with at least one of the rear side of the ear and the head to increase a contact area of the hook-like structure 12 with the ear and/or the head so as to increase a resistance of the earphone 10 to being dislodged from the ear. Second, at least a portion of the hook-like structure 12 may be configured as an elastic structure to enable the hook-like structure 12 to have a certain amount of deformation in the wearing state, so as to increase a positive pressure of the hook-like structure 12 on the ear and/or the head, thereby increasing the resistance of the earphone 10 to being dislodged from the ear. Third, at least a portion of the hook-like structure 12 may be configured to abut against the head in the wearing state, so as to form a reaction force that presses on the ear, thereby causing the core module 11 to press on the front side of the ear, and increasing the resistance of the earphone 10 to being dislodged from the ear. Fourth, the core module 11 and the hook-like structure 12 may be configured to hold a physiological part such as a region where the antihelix is located, a region where the cavum conchae is located, or the like, from the front side and the rear side of the ear in the wearing state, thereby increasing the resistance of the earphone 10 to being dislodged from the ear. Fifth, the core module 11 or an auxiliary structure connected thereto may be configured to at least partially extend into a physiological part such as the cavum conchae, the cymba conchae, the triangular fossa, and the scaphoid fossa, so as to increase the resistance of the earphone 10 to being dislodged from the ear.

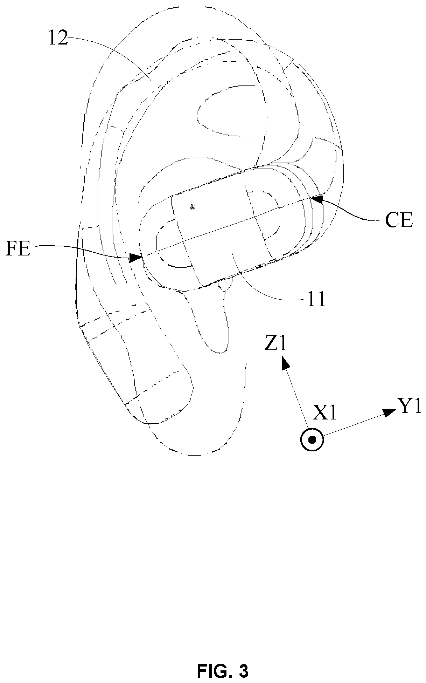

By way of exemplary, referring to FIG. 3, in the wearing state, the free end (FE) of the core module 11 may extend into the cavum conchae 102. The core module 11 and the hook-like structure 12 may be configured to jointly clamp an ear region corresponding to the cavum conchae from a front side and a rear side of the ear region, thereby increasing the resistance of the earphone 10 to being dislodged from the ear, and improve the stability of the earphone 10 in the wearing state. For example, the free end FE is pressed against the cavum conchae 102 in a thickness direction X1. As another example, the free end FE is pressed against the cavum conchae 102 in a length direction Y1 and a width direction Z1.

It should be noted that in the wearing state, not only the free end FE of the core module 11 extends into the cavum conchae 102, a positive projection of the core module 11 may fall on the antihelix 105, and the positive projection of the core module 11 may also fall on the left and right sides of the head and be located on the front side of the ear in the sagittal axis of the human body. In other words, the hook-like structure 12 may support the core module 11 to be worn at wearing positions such as the cavum conchae 102, the antihelix 105, the front side of the ear, etc.

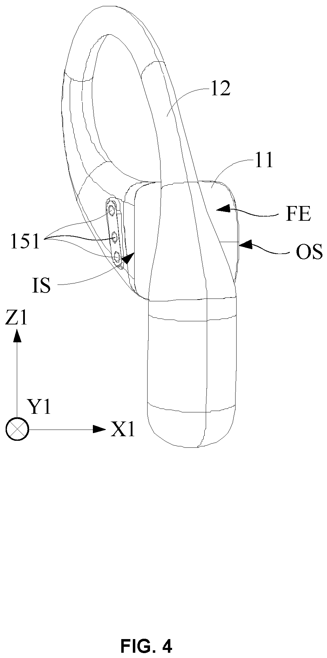

By way of exemplary, referring to FIG. 3 and FIG. 4, in the wearable state, the core module 11 may have an inner side surface IS facing toward the ear in a thickness direction X1 of the core module, an outer side surface OS facing away from the ear in the thickness direction X1, and a connection surface connecting the inner side surface IS and the outer side surface OS. The thickness direction X1 may be defined as a direction in which the core module 11 is close to or away from the ear in the wearing state. Furthermore, at least a portion of the connecting surface is disposed within the cavum conchae in the wearing state and forms a first contact zone with the front side of the ear, and the hook-like structure 12 forms a second contact zone with the rear side of the ear region in the wearing state. The second contact zone and the first contact zone at least partially overlap in an ear thickness direction of the ear region. In this way, not only can the core module 11 and the hook-like structure 12 jointly clamp the ear region from the front side and the rear side of the ear, but also a clamping force formed is mainly a compressive stress, which is conducive to improving the stability and comfort of the earphone 10 in the wearing state.

It should be noted that in the wearing state and viewed in a direction of the coronal axis, the core module 11 may be configured in a shape of a circle, an oval, a rounded square, a rounded rectangle, or the like. If the core module 11 is configured as a circle, an ellipse, or the like, the aforementioned connecting surface may be referred to as a curved side of the core module 11. If the core module 11 is configured as a rounded square, a rounded rectangle, or the like, the aforementioned connecting surface may include a lower side surface LS, an upper side surface US, and a rear side surface RS mentioned below. Further, the core module 11 may have a length direction Y1 and a width direction Z1 that are orthogonal to each other and perpendicular to the thickness direction X1. The length direction Y1 may be defined as a direction in which the core module 11 is close to or away from the back of the head of the user in the wearing state, and the width direction Z1 may be defined as a direction in which the core module 11 is near or away from the top of the head of the user in the wearing state. Thus, for ease of description, this embodiment takes the core module 11 configured as a rounded rectangle as an illustrative example. A length of the core module 11 in the length direction Y1 may be greater than a width of the core module 11 in the width direction Z1.

By way of exemplary, referring to FIG. 2, FIG. 3, and FIG. 5, in the wearing state and viewed in the direction of the coronal axis of the human body, the connecting end CE is closer to a top of the head compared to the free end FE so as to allow the free end FE to extend into the cavum conchae. Based on this, an angle between the length direction Y1 and a direction of the sagittal axis of the human body may be between 15° and 60°. If the aforementioned angle is too small, the free end FE may not extend into the cavum conchae, and an acoustic outlet hole 111a on the core module 11 may be too far away from the external ear canal. If the aforementioned angle is too large, the free end FE may not extend into the cavum conchae 102, and the external ear canal may be blocked by the core module 11. In other words, the above-described configuration not only allows the free end FE to extend into the cavum conchae 102, but also makes the acoustic outlet hole 111a on the core module 11 have a suitable distance from the external ear canal, so that the user can hear more sound waves generated by the core module 11 while ensuring that the external ear canal is not blocked.

By way of example, referring to FIG. 4, a positive projection of the hook-like structure 12 on a reference plane (e.g., the XZ plane in FIG. 4) perpendicular to the length direction Y1 partially overlaps with a positive projection of the free end FE of the hook-like structure 12 on the reference plane. An overlapping region formed by the overlapping of the positive projection of the hook-like structure 12 on the aforementioned reference plane and the positive projection of the free end FE on the same reference plane is located, in the thickness direction X1, between the inner side surface IS and the outer side surface OS. Through this configuration, not only can the core module 11 and the hook-like structure 12 jointly clamp the ear region from the front side and the rear side of the ear region, but also the clamping force formed is mainly a compressive stress, which is conducive to improving the stability and comfort of the earphone 10.

Furthermore, referring to FIG. 2, FIG. 4, FIG. 5, and FIG. 9, the hook-like structure 12 may include an elastic metal wire 121 connected to the core module 11 and a battery housing 123 connected to an end of the elastic metal wire 121 that is away from the core module 11. A battery 14 may be provided in the battery housing, the battery 14 is coupled to the core module 11, and a positive projection of the battery housing 123 on the reference plane partially overlaps with a positive projection of the free end FE of the hook-like structure 12 on the reference plane. Through this configuration, the battery housing 123 may support the ear from the rear side of the ear when the free end FE abuts against the cavum conchae 102, which is conducive to improving the stability of the earphone 10 in the wearing state. The battery housing 123 may include a cover shell 1231 connected to the elastic metal wire 121 and a battery compartment 1232 connected to the cover shell 1231, and the battery compartment 1232 and the cover shell 1231 cooperate to form a cavity structure that houses the battery 14.

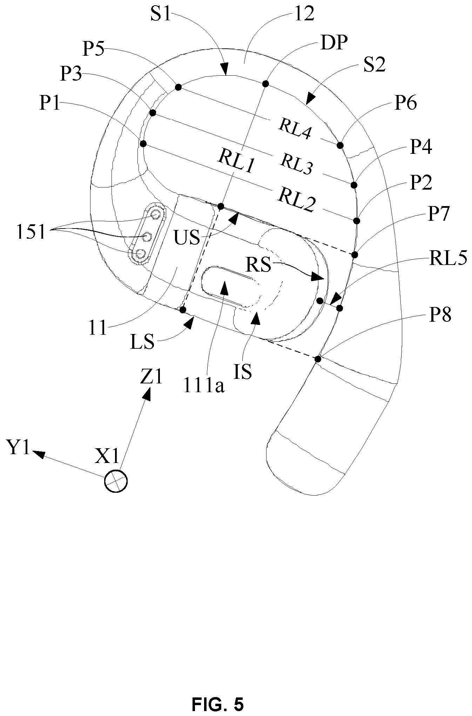

By way of example, referring to FIG. 5, in the wearing state, the core module 11 may have an upper side surface US facing away from the external ear canal in the width direction Z1, a lower side surface LS facing toward the external ear canal in the width direction Z1, and a rear side surface RS that connects the upper side surface US and the lower side surface LS. The rear side surface RS is located at an end of the core module 11 that faces a rear side of the head in the length direction Y1 when the core module 11 is in the wearing state and at least partially located in the cavum conchae 102. An edge of a side, facing toward the core module 11, of a positive projection of the hook-like structure 12 on a reference plane (e.g., the YZ plane in FIG. 5) that is perpendicular to the thickness direction X1 may be divided into a first section S1 and a second section S2 with a continuous arc transition. A dividing point DP between the first section S1 and a second section S2 may be located at a position where the edge is farthest from the upper side surface US of the core module 11 in the width direction Z1. Further, an overall curvature of the hook-like structure 12 in the first section S1 may be greater than an overall curvature of the hook-like structure 12 in the second section S2. This configuration not only enables the free end FE to extend into the cavum conchae 102, but also allows the hook-like structure 12 to cooperate with the core module 11 to provide a suitable clamping force.

It should be noted that the above overall curvature may be used to qualitatively characterize the degree of curvature of the different sections of the hook-like structure 12, wherein a radius of curvature of each section is a constant value or varies continuously. Thus, there exists at least one point within the first section S1 having a radius of curvature that is less than the radius of curvature of any point within the second section S2. Furthermore, the overall curvature described above may also be quantitatively characterized in terms of an average radius of curvature, i.e., an average of the radius of curvature of N points on each section.

Further, in an extension direction of the hook-like structure 12, a length of the second section S2 may be greater than a length of the first section S1, so as to facilitate the clamping of the ear by the hook-like structure 12 with the core module 11, and increase a contact area between the hook-like structure 12 and a skin of the user, which is conducive to improving the stability of the earphone 10 in the wearing state.

In some embodiments, the earphone 10 has a first reference line segment RL1 parallel to the width direction Z1. A starting point of the first reference line segment RL1 is a point where the first reference line segment RL1 intersects with the upper side surface US, and an ending point of the first reference line segment RL1 is the dividing point DP. A second reference line segment RL2, a third reference line segment RL3, and a fourth reference line segment RL4 described later are sequentially increasingly farther away from the starting point of the first reference line segment RL1 in the width direction Z1. Further, a length of the first reference line segment RL1 may bein a range of 13mm to 20mm. If the length of the first reference line segment RL1 is too small, the free end FE may not extend into the cavum conchae 102, and the acoustic outlet hole 111a on the core module 11 may be too far away from the external ear canal. If the length of the first reference line segment RL1 is too large, the free end FE may not extend into the cavum conchae 102, and the external ear canal may be blocked by the core module 11. In other words, the above-described configuration not only allows the free end FE to extend into the cavum conchae 102, but also makes the acoustic outlet hole 111a on the core module 11 have a suitable distance from the external ear canal, so that the user can hear more sound waves generated by the core module 11 while ensuring that the external ear canal is not blocked.

Further, a second reference line segment RL2 passing 1/4 of the first reference line segment RL1 and parallel to the length direction Y1 may intersect with the first section S1 and the second section S2 at a first intersection point P1 and a second intersection point P2, respectively. A distance between the first intersection point P1 and the starting point of the first reference line segment RL1 may be in a range of 9mm to 15mm, and a distance between the second intersection point P2 and the starting point of the first reference line segment RL 1 may be in a range of 12mm to 19mm. A third reference line segment RL3 passing 1/2 of the first reference line segment RL1 and parallel to the length direction Y1 may intersect with the first section S1 and the second section S2 at a third intersection point P3 and a fourth intersection point P4, respectively. A distance between the third intersection point P3 and the starting point of the first reference line segment RL 1 may be in a range of 11mm to 18mm, and a distance between the fourth intersection point P4 and the starting point of the first reference line segment RL 1 may be in a range of 12mm to 19mm. A fourth reference line segment RL 4 passing 3/4 of the first reference line segment RL 1 and parallel to the length direction Y1 may intersect with the first section S1 and the second section S2 at a fifth intersection point P5 and a sixth intersection point P6, respectively. A distance between the fifth intersection point P5 and the starting point of the first reference line segment RL 1 may be in a range of 12mm to 19mm, and a distance between the sixth intersection point P6 and the starting point of the first reference line segment RL1 may be in a range of 12mm to 19mm. This configuration makes the hook-like structure 12 better fit the ear when the free end FE of the core module 11 extends into the cavum conchae 102 and the acoustic outlet hole 111a on the core module 11 is at a suitable distance from the external ear canal.

In some embodiments, a fifth reference line segment RL5 with a shortest distance in the length direction Y1 is formed between the second section S2 and the rear side surface RS, and a length of the fifth reference line segment RL5 may be in a range of 2 mm to 3 mm. If the length of the fifth reference line segment RL5 is too small, it is likely to lead to the core module 11 and the hook-like structure 12 having an excessively large clamping force on the ear and causing wearing discomfort. If the length of the fifth reference line segment RL5 is too large, it is likely to cause the clamping force of the core module 11 and the hook-like structure 12 on the ear to be too small and cause wearing instability. In other words, the aforementioned configuration ensures both stability and comfort of the earphone 10 in the wearing state.

Further, the fifth reference line segment RL5 is defined as follows: a point where the fifth reference line segment RL5 intersects with the rear side surface RS is designated as a starting point of the fifth reference line segment RL5, and a point where the fifth reference line segment RL5 intersects with the second section S2 is designated as an end point of the fifth reference line segment RL5. A positive projection of the starting point of the first reference line segment RL1 along the length direction Y1 of the core module 11 may intersect with the second section S2 at a seventh intersection point P7, and a positive projection of an intersection point of a reverse extension line of the first reference line segment RL1 and the lower side surface LS along the length direction Y1 may intersect with the second section S2 at an eighth intersection point P8. A distance between the seventh intersection point P7 and the starting point of the fifth reference line segment RL5 may be in a range of 5mm and 9mm, and a distance between the eighth intersection point P8 and the starting point of the fifth reference line segment RL5 may be in a range of 5mm to 9mm. This configuration makes the hook-like structure 12 better fit the ear while ensuring stability and comfort of the earphone 10 in the wearing state.

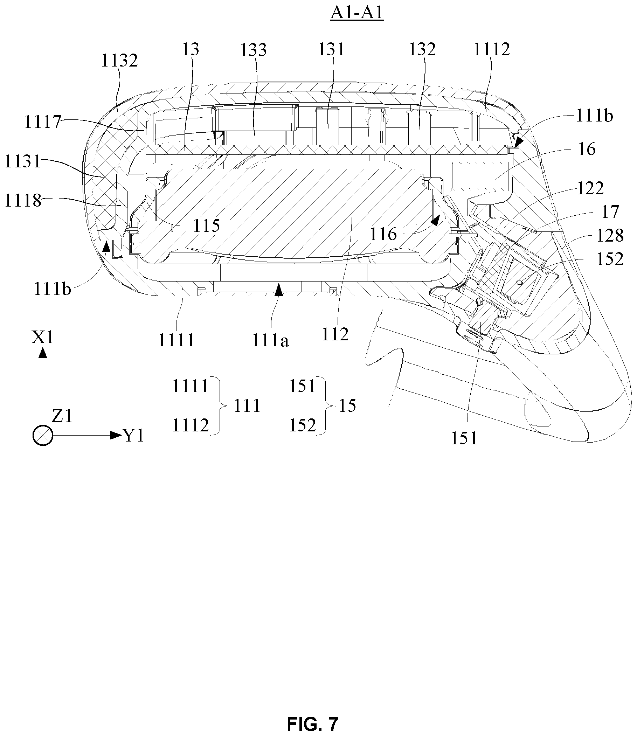

By way of example, referring to FIG. 7, FIG. 8, and FIG. 5, the core module 11 may include a core housing 111 connected to the hook-like structure 12 and a speaker 112 disposed within the core housing 111. An inner side surface (e.g., the inner side surface IS mentioned above) of the core housing 111 facing the ear in the wearing state may be provided with an acoustic outlet hole 111a, and a sound wave generated by the speaker 112 may propagate out through the acoustic outlet hole 111a so as to be easily transmitted into the external ear canal. It should be noted that the acoustic outlet hole 111a may also be provided on a side of the core housing 111 corresponding to the lower side surface LS, and may also be provided at a corner between the aforementioned inner side surface IS and the lower side surface LS. Further, the speaker 112 may include a magnetic circuit system, a voice coil extending into the magnetic circuit system, and a diaphragm connected to the voice coil. A magnetic field generated by the voice coil after being energized interacts with the magnetic field formed by the magnetic circuit system, thereby driving the diaphragm to generate mechanical vibration, which in turn generates sound by propagation through a medium such as air.

Further, referring to FIG. 7 to FIG. 9, the earphone 10 may include a main control circuit board 13 disposed within the core housing 111 and a battery 14 disposed at an end of the hook-like structure 12 away from the core module 11. The battery 14 and the speaker 112 are each coupled to the main control circuit board 13 to allow the battery 14 to power the speaker 112 under the control of the main control circuit board 13. Of course, the battery 14 and the speaker 112 may also be provided within the core housing 111, and the battery 14 may be closer to the connecting end CE while the speaker 112 may be closer to the free end FE.

By way of example, referring to FIG. 3 and FIG. 1, since the cymba conchae 103 has a certain volume and depth, there is a distance between an inner side surface of the core housing 111 and the cavum conchae 102 after the free end FE of the core module 11 extends into the cavum conchae 102. In other words, the core module 11 may cooperate with the cavum conchae 102 to form an auxiliary cavity connected to the external ear canal in the wearing state, and the acoustic outlet hole 111a may be at least partially disposed within the auxiliary cavity. Therefore, in the wearing state, sound waves generated by the speaker 112 and propagated through the acoustic outlet hole 111a may be constrained by the auxiliary cavity, i.e., the auxiliary cavity may converge the sound waves so that the sound waves may propagate more into the external ear canal, thereby increasing a volume and sound quality of the sound heard by a user in a near field, which is conducive to improving an acoustic effect of the earphone 10. Furthermore, as the core module 11 is configured not to block the external ear canal in the wearing state, the auxiliary cavity may be in a semi-open configuration. Thus, the sound waves produced by the speaker 112 and transmitted through the acoustic outlet hole 111a may primarily propagate into the external ear canal, while a small portion of the sound waves may pass through the gap between the core module 11 and the ear (e.g., a part of the cavum conchae 102 not covered by the core module 11) to the outside of the earphone 10 and the ear, creating a first leakage sound in a far field. Meanwhile, the core module 11 typically has one or more acoustic holes (e.g., a pressure relief hole 111c described below), and sound waves transmitted through the one or more acoustic holes may create a second leakage sound in the far field. A phase of the first leakage sound and a phase of the second leakage sound (which are close to each other) are generally opposite to each other, allowing the first leakage sound and the second leakage sound to cancel each other out in the far field, which helps to reduce leakage sound from the earphone 10 in the far field.

Further, the earphone 10 may include an adjusting mechanism connecting the core module 11 and the hook-like structure 12, and different users may adjust a position of the core module 11 in the wearing state via the adjusting mechanism to make the core module 11 located at a suitable position, thereby enabling the core module 11 to form the auxiliary cavity with the cavum conchae 102. In addition, the adjusting mechanism allows the user to adjust the earphone 10 to be worn to a more stable and comfortable position.

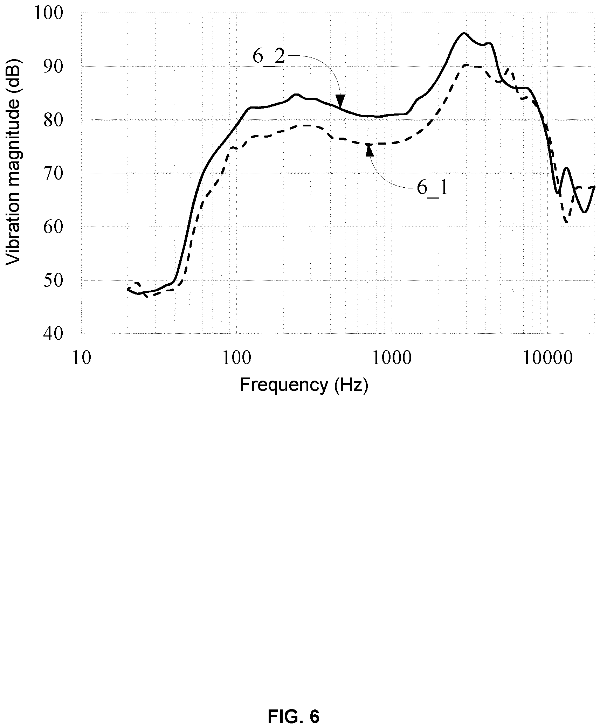

By way of example, referring to FIG. 6, the earphone 10 may be worn on the above simulator, then the position of the core module 11 on the ear of the above simulator may be adjusted, and a frequency response curve of the earphone 10 may be obtained via a detector (e.g., a microphone) disposed within the external ear canal (e.g., a position of the tympanic membrane, i.e., a listening position) of the above simulator, so as to simulate a sound-hearing effect of a user after wearing the earphone 10. The frequency response curve may characterize a change relationship between a vibration magnitude and a vibration frequency. A transverse coordinate of the frequency response curve denotes the vibration frequency, unit in Hz, and a vertical coordinate of the frequency response curve denotes the vibration magnitude, unit in dB. As shown in FIG. 6, a curve 6_1 may represent a frequency response curve of the core module 11 when the core module 11 is not cooperating with the cavum conchae 102 to form the auxiliary cavity in the wearing state, and a curve 6_2 may represent a frequency response curve of the core module 11 when the core module 11 is cooperating with the cavum conchae 102 to form the auxiliary cavity in the wearing state. Comparing the two frequency response curves illustrated in FIG. 6, it may be directly and unquestionably concluded that the curve 6_2 is located above the curve 6_1 as a whole. In other words, compared to the scenario when the core module 11 is not cooperating with the cavum conchae 102 in the wearing state, it is more conducive to improving the acoustic effect of the earphone 10 when the core module 11 cooperates with the cavum conchae 102 to form the auxiliary cavity with the concha cavity in the wearing state.

By way of example, referring to FIG. 7, FIG. 9, and FIG. 11, the core module 11 may include a flexible embedding block 1131 disposed outside of the core housing 111, and a hardness of the flexible embedding block 1131 may be less than a hardness of the core housing 111. The core housing 111 may be a plastic component, the flexible embedding block 1131 may be made of silicone, rubber, etc., and may be formed on a predetermined region of the core housing 111 by injection molding. Further, the flexible embedding block 1131 may at least partially cover a region of the core housing 111 corresponding to the free end FE such that at least a portion of the core module 11 abuts against the cavum conchae 102 via the flexible embedding block 1131 within the cavum conchae 102. In other words, a portion of the core housing 111 that extends into the cavum conchae 102 and is in contact with the cavum conchae 102 may be covered by the flexible embedding block 1131. Through this configuration, when the core module 11 abuts against the cavum conchae 102, for example, when the core module 11 and the hook-like structure 12 are configured to jointly clamp the ear region corresponding to the cavum conchae 102 from the front side and the rear side of the ear region, the flexible embedding block 1131 has a cushioning effect between the core housing 111 and the ear (e.g., the ear region) to alleviate the pressure of the earphone 10 on the ear, which is conducive to improving the comfort of the earphones 10 in the wearing state.

Exemplarily, the flexible embedding block 1131 may continuously overlay at least a portion of the core housing 111 corresponding to the rear side surface RS, the upper side surface US, and the lower side surface LS. For example, more than 90% of a region of the core housing 111 corresponding to the rear side surface RS is covered by the flexible embedding block 1131, and about 30% of each of regions of the core housing 111 corresponding to the upper side surface US and the lower side surface LS is covered by the flexible embedding block 1131. This configuration balances the comfort of the earphone 10 in the wearing state and the need to provide structural parts such as the speaker 112 in the core housing 111.

In some embodiments, the flexible embedding block 1131 may be configured as a U-shape when viewed along the thickness direction X1.

In some embodiments, a portion of the flexible embedding block 1131 corresponding to the lower side surface LS may abut against the antitragus 108. A thickness of a portion of the flexible embedding block 1131 corresponding to the rear side surface RS may be less than a thickness of a portion of the flexible embedding block 1131 corresponding to the upper side surface US and a thickness of a portion of the flexible embedding block 1131 corresponding to the lower side surface LS, respectively, so as to ensure wearing comfort even if the core module 11 abuts against an uneven position within the cavum conchae 102.

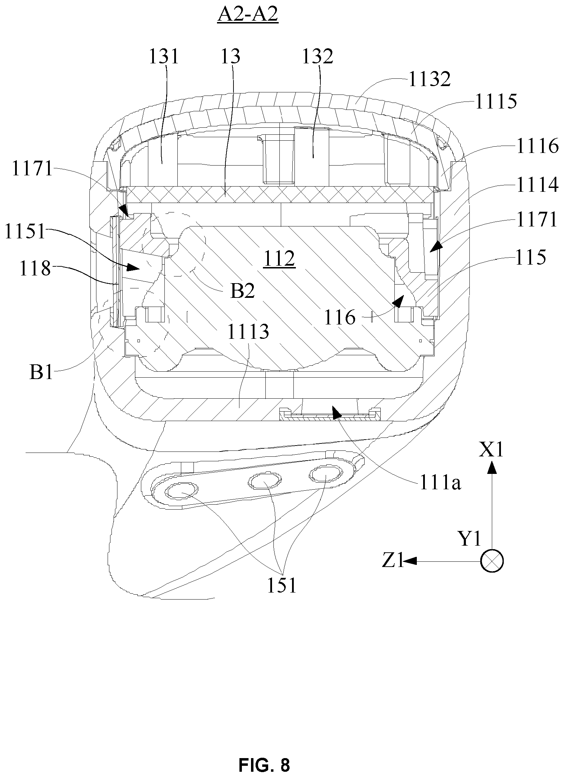

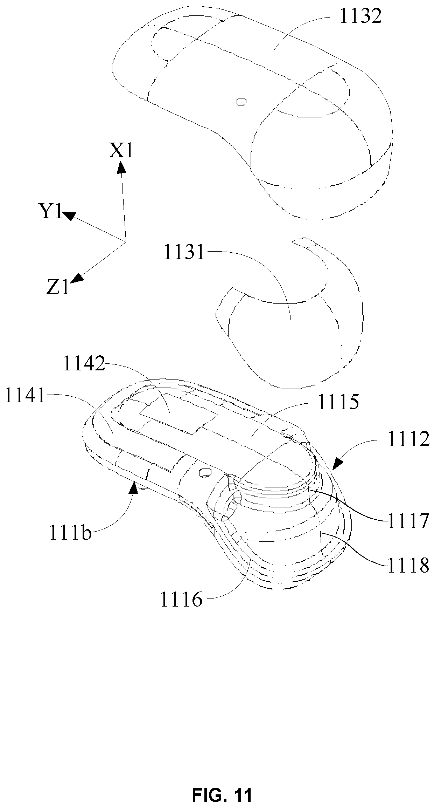

By way of example, referring to FIG. 7 and FIG. 8, the core housing 111 may include an inner core housing 1111 and an outer core housing 1112 that are snapped together with each other in the thickness direction X1. The inner core housing 1111 is closer to the ear in the wearing state compared to the outer core housing 1112. A parting surface 111b between the outer core housing 1112 and the inner core housing 1111 may be inclined in a direction close to the free end FE towards a side on which the inner core housing 1111 is located, such that the flexible embedding block 1131 is arranged as close as possible to a region of the outer core housing 1112 corresponding to the free end FE of the core module 11. For example, referring to FIG. 11, the flexible embedding block is entirely arranged in a region of the outer core housing 1112 corresponding to the free end FE of the core module 11, thereby simplifying the structure of the core module 11 and reducing processing costs.

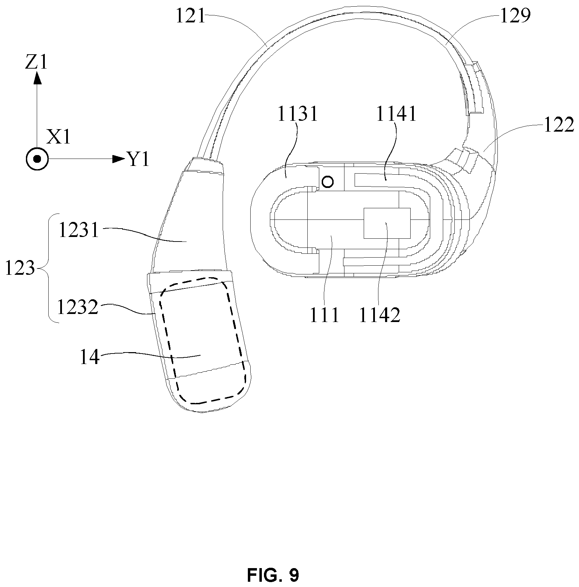

By way of example, referring to FIG.7, FIG.8, and FIG.11, the core module 11 may include a flexible cladding 1132, wherein the flexible cladding 1132 has a hardness that is less than the hardness of the core housing 111. The core housing 111 may be a plastic fabrication. The flexible cladding 1132 may be made of silicone, rubber, etc., and may be formed on a predetermined region of the core housing 111 by injection molding, glue attachment, etc. Further, the flexible cladding 1132 may integrally cover at least a portion of an outer surface of the flexible embedding block 1131 and at least a portion of an outer surface of the outer core housing 1112 that is not covered by the flexible embedding block 1131, thereby enhancing the consistency of the core module 11 in appearance. Of course, the flexible cladding 1132 may further cover an outer surface of the inner core housing 1111. The hardness of the flexible embedding block 1131 is less than the hardness of the flexible cladding 1132 to allow the flexible embedding block 1131 to be soft enough. In addition, the flexible cladding 1132 also improves the comfort of the earphone 10 in the wearing state and has a certain structural strength to protect the flexible embedding block 1131. Further, an area of the outer surface of the flexible embedding block 1131 may be between 126 mm² and 189 mm². If the area is too small, it is likely to lead to deterioration of the comfort of the core module 11 in the wearing state. If the area is too large, it may result in an excessively large volume of the core module 11, as well as an excessively large area of the flexible embedding block 1131 not abutting against the cavum conchae 102, which may not provide enough support and contradict the original intention of providing the flexible embedding block 1131. Further, a thickness of the flexible cladding 1132 is less than a thickness of the outer core housing 1112. By way of example, referring to FIG. 11 and FIG. 9, the core module 11 may include a metal function pattern such as an antenna pattern 1141 and/or a touch pattern 1142 provided between the outer core housing 1112 and the flexible cladding 1132. Among them, the antenna pattern 1141 can be molded on the outside of the outer core housing 1112 with the aid of laser-direct-structuring (LDS); the touch pattern 1142 can be molded on the outside of the outer core housing 1112 with the aid of laser-direct-structuring (LDS), or it can be a flexible touch circuit board pasted on the outside of the outer core housing 1112.

Further, the outer core housing 1112 is provided with metalized holes connected to the antenna pattern 1141 and the touch pattern 1142, respectively. The antenna pattern 1141 may be molded on an outer side of the outer core housing 1112 using a laser-direct-structuring (LDS) technology. The touch pattern 1142 may be molded on the outer side of the outer core housing 1112 using the LDS technology, or the touch pattern 1142 may be a flexible touch circuit board pasted on the outer side of the outer core housing 1112. Further, the outer core housing 1112 may be provided with metalized holes connected to the antenna pattern 1141 and the touch pattern 1142, respectively. At this time, since the main control circuit board 13 is provided in the core housing 111, for example, the main control circuit board 13 may be connected to the outer core housing 1112, t the main control circuit board 13 may be connected to the outer core housing 1112 through elastic metal members such as a pogo-PIN, a metal dome, etc., that are in contact with inner walls of the corresponding metalized holes. For example, the antenna pattern 1141 and the touch pattern 1142 may be respectively connected to a pogo-PIN 131 and a pogo-PIN 132 soldered to the main control circuit board 13. Correspondingly, the speaker 112 may be disposed on a side of the main control circuit board 13 away from the outer core housing 1112. In this way, compared to arranging the antenna pattern 1141 and the touch pattern 1142 respectively on an inner side of the outer core housing 1112 toward the speaker 112, arranging the antenna pattern 1141 on the outer side of the outer core housing 1112 can increase a distance between the antenna pattern 1141 and the main control circuit board 13, thereby increasing an antenna clearance area, and increasing an anti-interference capability of the antenna pattern 1141. Arranging the touch pattern 1142 on the outer side of the outer core housing 1112 can shorten a distance between the touch pattern 1142 and an external signal trigger source (e.g., a finger of a user), thereby reducing a touch distance and increasing sensitivity of the touch pattern 1142 to user triggers.

In some embodiments, the antenna pattern 1141 may surround a periphery of the touch pattern 1142 to fully utilize space on the outer side of the outer core housing 1112. The antenna pattern 1141 may be configured as a U-shape and the touch pattern 1142 may be configured as a square shape.

Further, the core module 11 may include a microphone 133 soldered to the main control circuit board 13, and the microphone 133 may collect a voice of the user and an ambient sound through a sound collection through-hole provided on the outer core housing 1112. The microphone 133 may be further pressed against the outer core housing 1112 when the main control circuit board 13 is connected to the outer core housing 1112.

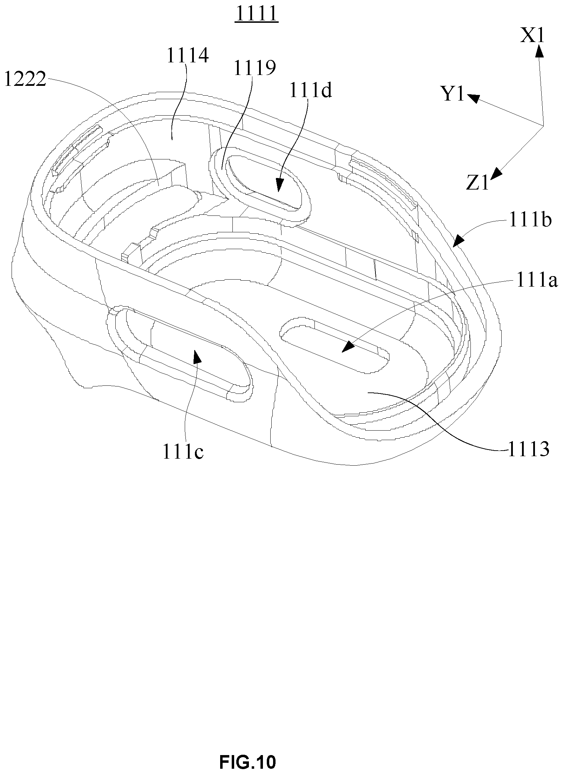

Exemplarily, referring to FIG. 10 and FIG. 11, the inner core housing 1111 may include a bottom wall 1113 and a first side wall 1114 connected to the bottom wall 1113, and the outer core housing 1112 may include a top wall 1115 and a second side wall 1116 connected to the top wall 1115, the second side wall 1116 and the first side wall 1114 being snapped to each other along the parting surface 111b, and supported by each other. When viewed along the width direction Z1, and in a reference direction (e.g., a direction opposite to the direction indicated by the arrow Y in FIGS. 10 and 11) in which the connecting end CE points to the free end FE, a portion of the first side wall 1114 close to the free end FE is progressively closer to the bottom wall 1113 in the thickness direction X1, and a portion of the second side wall 1116 close to the free end FE is progressively farther away from the top wall 1115 in the thickness direction X1, such that the parting surface 111b, in the direction close to the free end FE, is inclined toward the side on which the inner core housing 1111 is located. At this point, at least a portion of the flexible embedding block 1131 is disposed on the outer side of the second sidewall 1116. For example, referring to FIG. 11 and FIG. 9, a portion of the flexible embedding block 1131 is disposed on the outer side of the top wall 1115 and a portion of the flexible embedding block 1131 is disposed on the outer side of the second side wall 1116. Correspondingly, the acoustic outlet hole 111a may be provided on the bottom wall 1113. Of course, the acoustic outlet hole 111a may also be provided on a side of the first side wall 1114 corresponding to the lower side LS, and may also be provided at a corner between the first side wall 1114 and the bottom wall 1113. Furthermore, the antenna pattern 1141 and the touch pattern 1142 and their respective metallization holes may be provided on the top wall 1115, and the sound collection through-hole of the microphone 133 may also be provided on the top wall 1115.

By way of example, referring to FIG. 7 and FIG. 11, the outer core housing 1112 may be provided with an embedding groove at least partially disposed on the second sidewall 1116, so as to ensure a smooth transition between an outer surface of a region of the outer core housing 1112 not covered by the flexible embedding block 1131 and the outer surface of the flexible embedding block 1131. A region in which the flexible embedding block 1131 is located in FIG. 7 may be simply regarded as the aforementioned embedding groove. This configuration is not only conducive to the flexible embedded block 1131 being piled up on the outer core housing 1112 during an injection molding process, thereby avoiding overflow of the flexible embedded block 1131, but is also conducive to the improvement of the appearance quality of the core module 11, thereby avoiding the core module 11 from having a pitted surface.

Further, the second side wall 1116 may include a first sub-sidewall segment 1117 and a second sub-sidewall segment 1118 coupled to the first sub-sidewall segment 1117. The first sub-sidewall segment 1117 is closer to the top wall 1115 in the thickness direction X1 compared to the second sub-sidewall segment 1118, and the second sub-sidewall segment 1118 protrudes toward an outer side of the core housing 111 compared to the first sub-sidewall segment 1117. In short, the second side wall 1116 may be configured as a step-like structure. This configuration is not only conducive to the flexible embedding blocks 1131 being piled up on the outer core housing 1112 during injection molding to avoid overflowing of the flexible embedding blocks 1131, but also enables the core module 11 to better abut against the cavum conchae 102 via the flexible embedding block 1131, thereby improving the comfort of the earphone 10 in the wearing state.

Further, the main control circuit board 13 may be connected to the outer core housing 1112. For example, the main control circuit board 13 may be secured to a thermally fused post coupled to the top wall 1115 and may partially overlap the first sub-sidewall segment 1117 in the thickness direction X1. The speaker 112 may partially overlap the second sub-sidewall segment 1118 in the thickness direction X1. This configuration allows a sufficiently large speaker 112 to be disposed in the core housing 111, thereby enhancing a volume of the sound produced by the earphone 10.

By way of example, referring to FIG.10 and FIG.8, the core housing 111 may be provided with a pressure relief hole 111c, and the pressure relief hole 111c allows a space on a side of the speaker 112 toward the main control board 13 to be connected with an external environment, so that air may freely move in and out of the aforementioned space, which is conducive to reducing a resistance of a diaphragm of the speaker 112 during vibration. The pressure relief hole 111c may be oriented toward the top of the head in the wearing state, which prevents the leakage sound (i.e., the second leakage sound described above) transmitted through the pressure relief hole 111c from being heard. Based on the Helmholtz resonance cavity, a diameter of the pressure relief hole 111c may be as large as possible to allow a resonance frequency of the second leakage sound to be shifted as much as possible towards a relatively high frequency band (e.g., a frequency range greater than 4 kHz), which further prevents the second leakage sound from being heard.

Further, the core housing 111 may be provided with a sound tuning hole 111d, the sound tuning hole 111d causing the resonance frequency of the second leakage sound to be shifted as much as possible towards a relatively high frequency band (e.g., a frequency range greater than 4 kHz), which further prevents the second leakage sound from being heard. An area of the sound tuning hole 111d may be smaller than an area of the pressure relief hole 111c to allow more of the space on the side of the speaker 112 toward the main control circuit board 13 to be connected to the external environment through the pressure relief hole 111c. Furthermore, a distance between the acoustic outlet hole 111a and the pressure relief hole 111c in the width direction Z1 may be larger than a distance between the acoustic outlet hole 111a and the sound tuning hole 111d in the width direction Z1 to avoid the sound waves propagating through the acoustic outlet hole 111a and the pressure relief hole 111c from canceling each other in the near field, which is conducive to increasing a volume of the sound that propagates through the acoustic outlet hole 111a and heard by the user. Correspondingly, the sound tuning hole111d is located closer to the connecting end CE than the acoustic outlet hole 111a in order to increase a spacing between the acoustic outlet hole 111a and the sound tuning hole111d in the length direction Y1, so as to prevent a sound wave propagated through the acoustic outlet hole 111a and a sound wave propagated through the sound tuning hole 111d from canceling each other out in a near field, thereby increasing the volume of the sound propagated through the sound output hole 111a and heard by the user.

By way of example, referring to FIG. 10, the acoustic outlet hole 111a, the pressure relief hole 111c, and the sound tuning hole 111d may be disposed on the inner core housing 1111. For example, the acoustic outlet hole 111a may be disposed on the bottom wall 1113 while the pressure relief hole 111c and the sound tuning hole 111d may be disposed on the first side wall 1114. The pressure relief hole 111c and the sound tuning hole 111d may be disposed on two opposite sides of the first side wall 1114 along the width direction Z1, respectively. By disposing the acoustic outlet hole 111a, the pressure relief hole 111c, and the sound tuning hole 111d on the inner core housing 1111, a structure of the outer core housing 1112 is simplified, which is conducive to reducing processing costs. In addition, since the pressure relief hole 111c and the sound tuning hole 111d are respectively provided on the two opposite sides of the first sidewall 1114 along the width direction Z1, the parting surface 111b can be symmetrically provided with respect to a reference plane perpendicular to the width direction Z1, which is conducive to improving the appearance of the core module 11.

By way of example, referring to FIGS. 7 and 8, the core module 11 may include a bracket 115 disposed within the core housing 111, and the bracket 115 and the speaker 112 may be enclosed to form an acoustic cavity 116 to enable the acoustic cavity 116 to be separated from other structures (e.g., the main control circuit board 13, or the like) within the core housing 111, which is conducive to improving an acoustic performance of the core module 11. The core housing 111 may include an acoustic hole, for example, the acoustic hole may be at least one of the pressure relief hole 111c or the sound tuning hole 111d, and the bracket 115 may include an acoustic channel 1151 that is in flow communication with the acoustic hole and the acoustic cavity 116, so that the acoustic cavity 116 is connected to an external environment, i.e., air may freely flow in and out of the acoustic cavity 116, which is conducive to reducing the resistance of the diaphragm of the speaker 112 during vibration.

Further, the bracket 115 may cooperate with the core housing 111 to form a first adhesive-containing groove 1171 surrounding at least a portion of the acoustic hole, and the first adhesive-containing groove 1171 may contain a first adhesive for sealing an assembly gap between the bracket 115 and the core housing 111, i.e., waterproof sealing through the first adhesive, which is conducive to preventing the intrusion of droplets such as sweat, rainwater, or the like, from the external environment into the space where the main control circuit board 13 is located within the core housing 111. In this way, based on the Helmholtz resonance cavity, compared to the related technology in which a silicone sleeve is held down on the core housing 111 by means of the bracket 115 for waterproof sealing, the present technological solution for waterproof sealing by means of the first adhesive can dispense with the aforementioned silicone sleeve in the related technology, which is conducive to shortening a length of a portion (including the acoustic channel 1151 and the acoustic hole) of the acoustic cavity 116 that is connected to the external environment and enabling the resonance frequency of a leakage sound (i.e., the above-described second leakage sound) propagating out through the pressure relief hole 111c to be shifted as much as possible to a relatively high frequency band (e.g., a frequency range of greater than 4 kHz), thereby further avoiding the second leakage sound from being heard.

It should be noted that, if the acoustic hole is the pressure relief hole 111c, the first adhesive-containing groove 1171 may surround at least a portion of the pressure relief holes 111c; if the acoustic hole is the sound tuning hole 111d, the first adhesive-containing groove 1171 may surround at least a portion of the sound tuning holes 111d; if the acoustic hole is the pressure relief hole 111c and the sound tuning hole 111d, the first adhesive-containing groove 1171 may surround at least a portion of the pressure relief hole 111c and at least a portion of the sound tuning hole 111d, respectively. For ease of description and referring to FIGs. 8, 10, and 12, the present disclosure takes the acoustic hole being the pressure relief hole 111c and the sound tuning hole 111d as an example, and the first adhesive-containing groove 1171 surrounds at least a portion of the pressure relief holes 111c and at least a portion of the sound tuning holes 111d, respectively. Further, if the assembly gap between the bracket 115 and the core housing 111 (e.g., the bottom wall 1113) is sufficiently large, or if the bottom wall 1113 and the first side wall 1114 in the core housing 111 are not an integrally molded structural member (i.e., two separate structural members), the first adhesive-containing groove 1171 may surround all of the aforementioned acoustic hole, i.e., the first adhesive-containing groove 1171 is a complete annular structure.

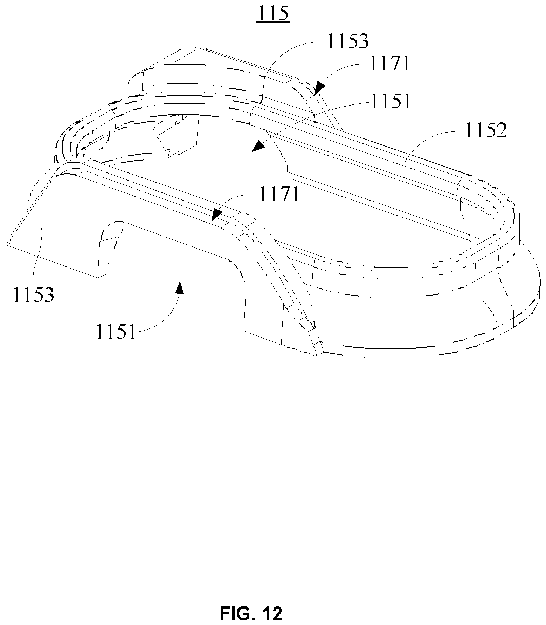

Byway of example, referring to FIG. 12 and FIG. 10, the bracket 115 may include an annular main body portion 1152 and a docking portion 1153 connected to the annular main body portion 1152. The annular main body portion 1152 may be sleeved on a periphery of the speaker 112 to form the acoustic cavity 116, and the acoustic channel 1151 may penetrate through the docking portion 1153 and the annular main body portion 1152. Further, the docking portion 1153 may be disposed between the annular main body portion 1152 and the core housing 111 and surround at least a portion of the acoustic hole, and the docking portion 1153 may cooperate with the core housing 111 to form the first adhesive-containing groove 1171. Since the acoustic hole may be the pressure relief hole 111c and the sound tuning hole 111d, correspondingly, two docking portions 1153 and two first adhesive-containing grooves 1171 may be provided, and the two docking portions 1153 may cooperate with the first side wall 1114 to form the two first adhesive-containing grooves 1171, respectively. Since the bracket 115 is configured as an annular shape, a side of the speaker 112 towards the main control circuit board 13 is exposed, which reduces the thickness of the core module 11 in the thickness direction X1.

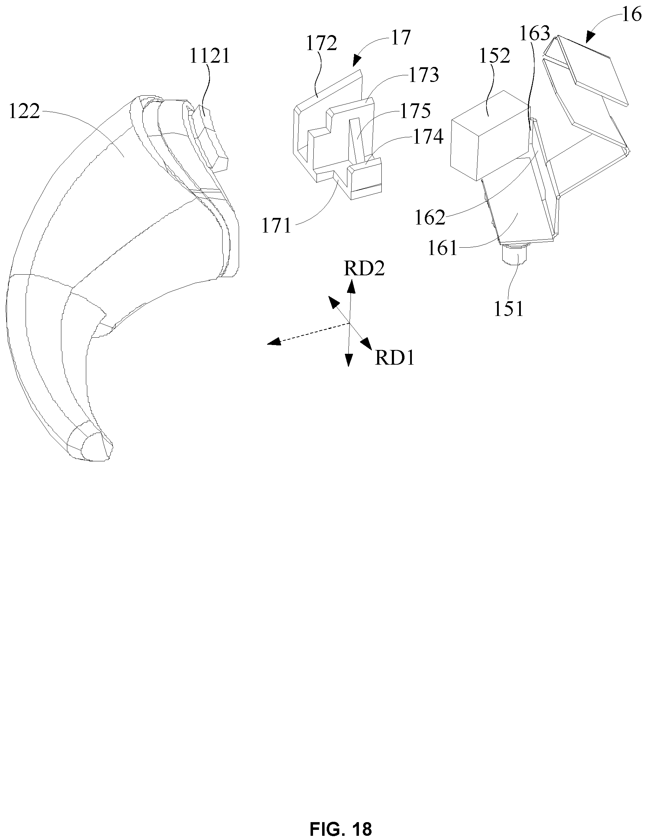

By way of example, referring to FIG. 10 and FIG. 18, the inner side of the core housing 111 may include a recessed region 1119, and the acoustic hole may be located at a bottom of the recessed region 1119. The core module 11 may include an acoustic resistance mesh 118 disposed within the recessed region 1119, and the docking portion 1153 may press the acoustic resistance mesh 118 against the bottom of the recessed region 1119. This configuration prevents the bracket 115 from scraping the acoustic resistance mesh 118 during assembly, narrows an assembly gap between the bracket 115, the acoustic resistance mesh 118, and the inner casing 1111 of the core module 11, and prevents the acoustic resistance mesh 118 from wobbling. The acoustic resistance mesh 118 may be pre-fixed to the bottom of the recessed region 1119 through a double-sided adhesive or glue. The acoustic resistance mesh 118 may also be pre-fixed to a protective steel mesh 119, and the protective steel mesh 119 may then be pre-fixed to the bottom of the recessed region 1119 through a double-sided adhesive or glue. Since the acoustic hole may be the pressure relief hole 111c and the sound tuning hole 111d, the inner side of the core housing may include two recessed regions 1119, and accordingly, two acoustic resistance meshes 118 may be provided.

Further, the first adhesive may further seal an assembly gap between the bracket 115 and the acoustic resistance mesh 118 and/or an assembly gap between the acoustic resistance mesh 118 and the core housing 111 (e.g., a side wall of the recessed region 1119), which further facilitates waterproof sealing.

By way of example, referring to FIG. 8, FIG. 10, and FIG. 12, the docking portion 1153 may be configured to form a bottom wall and one side wall of the first adhesive-containing groove 1171, and the core housing 111 may form another side wall of the first adhesive-containing groove 1171. The side wall of the first adhesive-containing groove 1171 formed by the core housing 111 and the side wall of the first adhesive-containing groove 1171 formed by the docking portion 1153 may be arranged opposite to each other, so that the first adhesive-containing groove 1171 has a certain width and depth. Of course, the docking portion 1153 may be configured to form one side wall of the first adhesive-containing groove 1171, and the core housing 111 may be configured to form the bottom wall and another side wall of the first adhesive-containing groove 1171. Alternatively, the docking portion 1153 may be configured to form one side wall and a portion of the bottom wall of the first adhesive-containing groove 1171, and the core housing 111 may be configured to form another side wall and another portion of the bottom wall of the first adhesive-containing groove 1171.

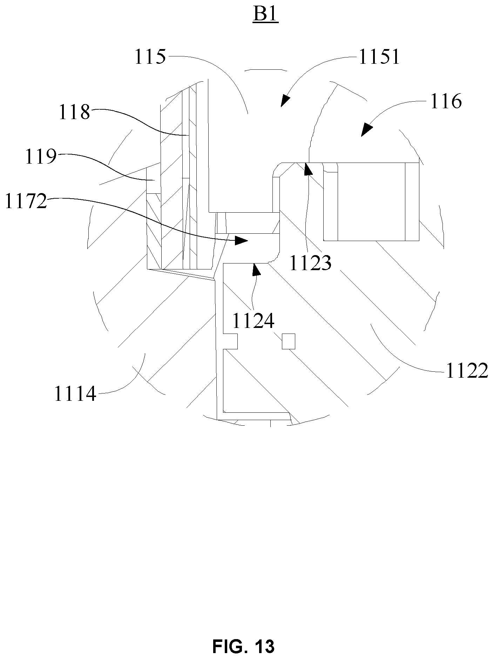

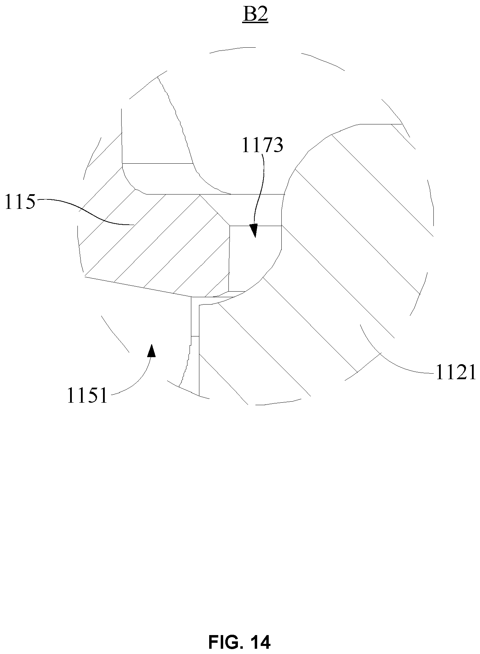

By way of example, referring to FIG. 12 to FIG. 14, the speaker 112 may include a body 1121 and an annular bearing terrace 1122 provided along a circumferential direction of the body 1121. A lower end of the bracket 115 may be supported on the annular bearing terrace 1122. The acoustic channel 1151 may be configured open on a side facing the annular bearing terrace 1122, and the annular bearing terrace 1122 seals the open portion of the acoustic channel 1151. At this point, it may be simply considered that the first adhesive-containing groove 1171 surrounds a portion of the acoustic hole, allowing for subsequent filling of the first adhesive-containing groove 1171 with adhesive using techniques such as dispensing, etc.

In some embodiments, the annular bearing terrace 1122 may include a first annular terrace surface 1123 and a second annular terrace surface 1124 that are configured as a stepped shape, and the second annular terrace surface 1124 may surround a periphery of the first annular terrace surface 1123. A portion of the lower end of the bracket 115 may be supported on the first annular terrace surface 1123, and another portion of the lower end of the bracket 115 may form a gap region with the second annular terrace surface 1124, so that the bracket 115, the annular bearing terrace 1122, and the core housing 111 may cooperate to form a second adhesive-containing groove 1172. The second adhesive-containing groove 1172 may contain a second adhesive for sealing an assembly gap between any two of the bracket 115, the annular bearing terrace 1122, and the core housing 111 for a corresponding waterproof seal.

In some embodiments, an upper end of the bracket 115 may be lapped on the body 1121 of the speaker 112 and cooperate with the body 1121 to form a third adhesive-containing groove 1173. The third adhesive-containing groove 1173 may contain a third adhesive for sealing an assembly gap between the bracket 115 and the body 1121 for waterproof seal.

It should be noted that in a specific assembly process of the core module 11, the following process operations may be included, and the sequence of the operations in the process may be adjusted as needed. (1) The acoustic resistance mesh 118 may be pre-fixed to the bottom of the recessed region 1119 through a double-sided adhesive. (2) The speaker 112 may be fixed to the bottom wall 1113 and an adhesive may be dispensed to the assembly gap between the speaker 112 and the bottom wall 1113, and the corresponding adhesive partially accumulates on the second annular terrace surface 1124 of the speaker 112. (3) The bracket 115 may be fixed to the speaker 112 before the adhesive in operation (2) is cured, and the lower end of the bracket 115 is supported by the first annular terrace surface 1123 of the speaker 112, so that the gap between the lower end of the bracket 115 and the second annular terrace surface 1124 is also filled with the adhesive, and the docking portion 1153 of the bracket 115 presses against the acoustic resistance mesh 118 and cooperates with the first sidewall 1114 to form the first adhesive-containing groove 1171, and the upper end of the bracket 115 is lapped on the body 1121 and cooperates with the body 1121 to form the third adhesive-containing groove 1173. (4) An adhesive may be dispensed to the first adhesive-containing groove 1171, the third adhesive-containing groove 1173, an assembly gap between the lower end of the bracket 115, the speaker 112, and the inner core housing 1111. Since the assembly gap between the lower end of the bracket 115 and the speaker 112 and the assembly gap between the lower end of the bracket 115 and the inner core housing 1111 are close to the first adhesive-containing groove 1171, the assembly gap between the lower end of the bracket 115 and the speaker 112 and the assembly gap between the lower end of the bracket 115 and the inner core housing 1111 may be simply regarded as a continuation of the first adhesive-containing groove 1171, i.e., the first adhesive-containing groove 1171 and the second adhesive-containing groove 1172 may be in flow communication.

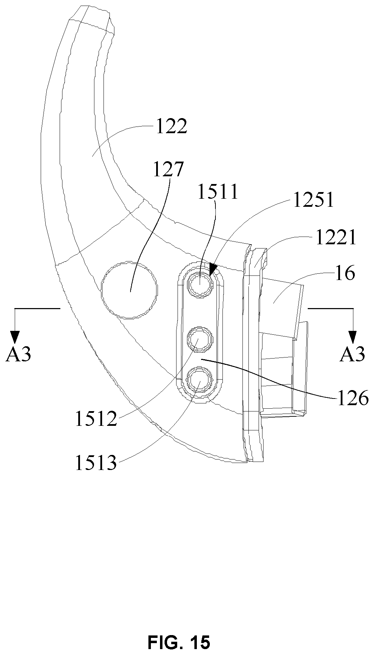

By way of example, referring to FIGs. 15 to 18 and FIG. 7, the hook-like structure 12 may include an adapter housing 122 connected to the core module 11, and an accommodation cavity 124 is pre-formed in the adapter housing 122. The earphone 10 may include an electronic component 15 that is subsequently mounted in the accommodation cavity 124. The adapter housing 122 and the core module 11 may be connected through any one of snap-fit, welding, adhesive bonding, threaded connection, or screw connection, or a combination thereof. Compared to the related technology in which the electronic component 15 is provided in the core module 11, by mounting the electronic component 15 within the pre-formed accommodation cavity 124 of the hook-like structure 12, the present disclosure not only saves space in the core module 11, making it structurally more compact and smaller, but also simplifies the structure of the core module 11 for higher assembly efficiency. Additionally, it facilitates a reasonable layout of relative positions of various structural components in the earphone 10, ensuring that both the core module 11 and the hook-like structure 12 are fully utilized.

It should be noted that the accommodation cavity 124 being pre-formed in the adapter housing 122 means that the accommodation cavity 124 is formed simultaneously during the molding of the adapter housing 122, rather than being machined after the adapter housing 122 is molded. For example, if the adapter housing 122 is a plastic housing, the corresponding accommodation cavity 124 may be obtained by incorporating an appropriate core during the injection molding of the plastic housing. Accordingly, the electronic component 15 being subsequently mounted in the accommodation cavity 124 refers to that the electronic component 15 is not integrally molded with the adapter housing 122. For example, if the adapter housing 122 is a plastic housing, the electronic component 15 is not integrally injection molded within the plastic housing using an insert technique. Based on this, a through-hole 1251, a blind hole 1252, and a through-hole 1253, etc., referred to later in the present disclosure are pre-formed in the adapter housing in the same manner and will not be repeated again. Of course, the accommodation cavity 124 may also be obtained through a drilling process after the adapter housing 122 is molded. Similarly, the through-hole 1251, the blind hole 1252, and the through-hole 1253, etc., may also be obtained through a drilling process after the adapter housing 122 is molded.

By way of example, referring to FIG. 7, the electronic component 15 may be connected to the main control circuit board 13 to realize an electrical connection between the hook-like structure 12 and the core module 11, and the adapter housing 122 may be plugged and fixed to the core housing 111 to realize a structural connection between the hook-like structure 12 and the core module 11, which is simple and reliable. The aforesaid plugging and fixation refers to that one of the adapter housing 122 and the core housing 111 is first partially inserted into the other along an assembling direction, and then plugged in and fixed with the aid of another limiting structure such as a pin, wherein an assembly direction of the limiting structure is different from and not parallel to the aforementioned assembling direction. The aforementioned plugging and fixation may also refer to that one of the adapter housing 122 and the core housing 111 is plugged in when it is partially extended into the other without the aid of the aforementioned limiting structure.

By way of example, referring to FIG. 7, FIG. 10, and FIG. 16, the adapter housing 122 may be provided with a first snap structure 1221, the core housing 111 may be provided with a second snap structure 1222, and the first snap structure 1221 extends into the core housing 111 and snaps with the second snap structure 1222 to cooperate with each other, thereby enabling the structural connection between the adapter housing 122 and the core housing 111, which is simple and reliable. Two first snap structures 1221 may be integrally disposed on the adapter housing 122 and spaced apart relative to each other in the thickness direction X1, and two second snap structures 1222 may be integrally disposed on the inner core housing 1111 and arranged in a one-to-one correspondence with the two first snap structures 1221.

By way of example, referring to FIG. 7, the earphone 10 may include a flexible circuit board 16 at least partially disposed within the accommodation cavity 124 to be connected to the electronic component 15 and extend into the core housing 111, such that the electronic components 15 to be connected to the main control circuit board 13 via the flexible circuit board 16. For example, the electronic component 15 may be soldered to one end of the flexible circuit board 16 using a surface mounted technology (SMT), and the other end of the circuit board of the flexible circuit board 16 and the main control circuit board 13 may be snapped together through a BTB connector. The speaker 112 may be configured to be connected to the flexible circuit board 16 on an extension path of the flexible circuit board 16, such as leads of the speaker 112 are soldered to a corresponding region of the flexible circuit board 16, such that the speaker 112 is also connected to the main control circuit board 13 via the flexible circuit board 16, and the leads of the speaker 112 do not need to be extended to be connected to the main control circuit board 13, which is conducive to simplifying the alignment structure of the earphone 10 and reducing production costs.

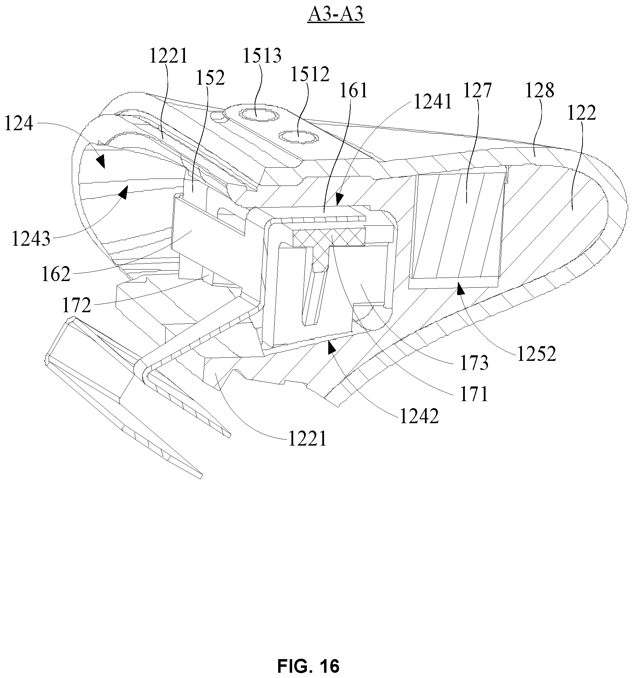

By way of example, referring to FIG. 16 and FIG. 15, the adapter housing 122 may be pre-formed with through-holes 1251 communicating with the accommodation cavity 124, and the electronic component 15 may include an electrode terminal 151 at least partially disposed within the through-holes 1251. The electrode terminal 151 may be a retractable elastic component such as a pogo-PIN or a non-retractable rigid component such as a metal post. A diameter of the through-holes 1251 may be larger than an outer diameter of the electrode terminal 151 to facilitate subsequent addition of the electrode terminal 151. Of course, the electrode terminal 151 may also be integrally molded with the adapter housing 122 in the form of an insert. Furthermore, the electrode terminal 151 may be oriented toward the ear in the wearing state so that the electrode terminal 151 is not visible in the wearing state, which is conducive to improving the appearance of the earphone 10 in the wearing state.

It should be noted that if the electrode terminal 151 is configured as a retractable elastic part such as a pogo-PIN, an extension direction of the electrode terminal 151 may be the direction in which it retracts. If the electrode terminal 151 is configured as a non-retractable rigid part such as a metal post, the extension direction of the electrode terminal 151 may be the direction in which its axis is located.

Further, a plurality of electrode terminals 151 may be provided according to the actual use requirements, such as for charging, detecting, or the like.

In some embodiments, the electrode terminal 151 may include a charging positive terminal 1511 and a charging negative terminal 1512 spaced apart from each other, and the charging positive terminal 1511 and the charging negative terminal 1512 may be disposed in the corresponding through-hole 1251, respectively, so as to facilitate charging of the earphone 10 through the electrode terminal 151. Of course, one of the charging positive terminal 1511 and the charging negative terminal 1512 may be provided on the adapter housing 122, and the other may be provided on another housing such as the battery housing 123 in the hook-like structure 12 or provided on the inner core housing 1111.

In some embodiments, the electrode terminal 151 may include a detection terminal 1513 spaced apart from the charging positive terminal 1511 and the charging negative terminal 1512 from each other, and the detection terminal 1513 may be configured to perform detection functions such as a charging detection, a detection of the earphone 10 into or out of a charging case, or the like. Of course, the detection terminal 1513 may also be replaced by an electronic component such as a Hall sensor.

In some embodiments, when viewed along the extension direction of the electrode terminal 151, lines connecting the charging positive terminal 1511, the charging negative terminal 1512, and the detecting terminal 1513 may form a triangle, such as an equilateral triangle.

In some embodiments, the charging positive terminal 1511, the charging negative terminal 1512, and the detection terminal 1513 may be spaced apart from each other in a line segment, such as arranged in a straight line segment, when viewed along the extension direction of the electrode terminal 151. A spacing between the charging positive terminal 1511 and the charging negative terminal 1512 may be greater than a spacing between the charging negative terminal 1512 and the detection terminal 1513. For example, the charging negative terminal 1512 is disposed between the charging positive terminal 1511 and the detecting terminal 1513, and the spacing between the charging positive terminal 1511 and the charging negative terminal 1512 is greater than the spacing between the charging negative terminal 1512 and the detecting terminal 1513. As another example, the detection terminal 1513 is disposed between the charging positive terminal sub 1511 and the charging negative terminal sub 1512. In this manner, when there is limited space for the provision of the electrode terminals 151 on the adapter housing 122, the spacing between the charging positive terminal 1511 and the charging negative terminal 1512 can be made as large as possible, thereby avoiding short circuits between the charging positive terminal 1511 and the charging negative terminal 1512

Exemplarily, referring to FIG. 15, the outer side of the adapter housing 122 may be provided with a tab 126, and the through-holes 1251 further penetrate through the tab 126 to allow a plurality of electrode terminals 151 to be exposed at the tab 126 respectively. In this way, a local region of the adapter housing 122 that is not flat due to having a certain curvature is made flat by the tab 126 so as to facilitate the setting of the electrode terminals 151. The charging positive terminal 1511, the charging negative terminal 1512, and the detecting terminal 1513 may be spaced sequentially along a length direction of the tab 126.

Exemplarily, referring to FIG. 15 to FIG. 17, the hook-like structure 12 may include a magnet 127, and the magnet 127 and the electrode terminal 151 may be exposed on a same side of the adapter housing 122, i.e., the magnet 127 and the electrode terminal 151 may be visible on a same side surface of the adapter housing 122 to bring the magnet 127 closer to an outside toward which an exposed end of the electrode terminal 151 is facing, thereby shortening a spacing between the magnet 127 and a magnetic suction structure used to cooperate with the magnet 127 in a charging device (e.g., a charging case), or a spacing between the magnet 127 and a Hall sensor used to cooperate with the magnet 127, which facilitates improvement of the reliability of functions such as charging, detection, or the like. The magnet 127 and the electrode terminal 151 may be arranged adjacent to each other to allow the magnet 127 to cooperate with the magnetic suction structure in the charging device, (e.g., the charging case), such that the electrode terminal 151 cooperates with an electrode terminal in the charging device to facilitate charging. Correspondingly, the tab 126 may protrude out of the adapter housing 122 around the magnet 127, i.e., the magnet 127 may be lower than the tab 126 to allow the electrode terminal 151 to come into contact with the electrode terminal in the charging device (e.g., the charging case). Of course, in the embodiment in which the magnet 127 cooperates with a Hall sensor in a charging device such as a charging case for detection, the magnet 127 may be arranged adjacent to the electrode terminal 151, which allows the Hall sensor to be arranged adjacent to the electrode terminal in the charging device (e.g., the charging case) that cooperates with the electrode terminal 151 for charging, thereby reducing an area of the charging device (e.g., the charging case) for carrying the aforementioned electrode terminal and the Hall sensor.

Further, the hook-like structure 12 may include a flexible cover layer 128, the flexible cover layer 128 having a hardness that is less than a hardness of the adapter housing 122. The adapter housing 122 may be a plastic member, and the flexible cover layer 128 may be made of silicone, rubber, etc., and may be formed on the adapter housing 122 by injection molding, glue attachment, etc. Furthermore, the flexible cover layer 128 may cover the adapter housing 122 and the magnet 127, so that the magnet 127 is not exposed and the electrode terminal 151 is exposed, i.e., the magnet 127 is not visible and the electrode terminal 151 is visible. This arrangement satisfies usage requirements of the electrode terminal 151 while also concealing the magnet 127, preventing he magnet 127 from being exposed, which may lead to wear or negatively affect the appearance of the earphone 10. In addition, the flexible cover layer 128 contributes to improving the comfort of the earphone 10 in the wearing state. A thickness of the flexible cover layer 128 is less than a thickness of the adapter housing 122.

Exemplarily, referring to FIG. 16, the adapter housing 122 may be preformed with a blind hole 1252 that is not connected to the accommodation cavity 124 to increase the water and dust resistance of the accommodation cavity 124. The magnet 127 may be provided at least within the blind hole 1252 and exposed via an open end of the blind hole 1252. This arrangement is not only beneficial to reducing the thickness of the adapter housing 122 in the region where the magnet 127 is located, but also beneficial to improving the appearance of the earphone 10 in the region where the magnet 127 is located. Of course, the blind hole 1252 may also be configured as a through-hole.

By way of example, referring to FIG. 15, when viewed in the extension direction of the electrode terminal 151, a plurality of electrode terminals 151 may be spaced apart from each other in a line segment, such as a straight line segment or a polyline segment. The magnet 127 may be disposed on either side of the foregoing line segment, or the magnet 127 intersects the foregoing line segment and is at least partially disposed between any two adjacent electrode terminals 151. For example, a count of magnets 127 is one, and the entire magnet 127 is disposed on either side of the foregoing line segment, or the entire magnet 127 intersects with the foregoing line segment and is disposed between any two adjacent electrode terminals 151. As another example, the count of magnets 127 is two, with one magnet 127 being disposed integrally on one side of the foregoing line segment and the other magnet 127 being disposed on the other side of the foregoing line segment. As a further example, the count of magnets 127 is one, a portion of the magnet 127 intersects with the foregoing line segment and is disposed between any two adjacent electrode terminals 151, and another portion is disposed below the electrode terminal 151 in the foregoing extension direction.

Exemplarily, referring to FIG. 15, the plurality of electrode terminals 151 may include a charging positive terminal 1511, a charging negative terminal 1512, and a detecting terminal 1513 arranged in a straight line segment. The magnet 127 may be located on one side of the aforementioned linear segment. Furthermore, when viewed along the extension direction of the electrode terminal 151, a center of the magnet 127 has a first distance, a second distance, and a third distance with a center of the charging positive terminal 1511, a center of the charging negative terminal 1512, and a center of the detecting terminal 1513 respectively, to prioritize charging reliability. It should be noted that in the embodiment in which the hook-like structure 12 is provided with the flexible cover layer 128, in order to conveniently determine a relative positional relationship between the magnet 127, the charging positive terminal 1511, the charging negative terminal 1512, and the detection terminal 1513, the flexible cover layer 128 may be removed first.

Exemplarily, referring to FIG. 16 to FIG. 18, the electronic component 15 may include an electrode terminal 151 and a microphone 152, and the adapter housing 122 may be preformed with a through-hole 1251 and a through-hole 1253 that are in communication with the accommodation cavity 124, respectively. Due to different roles of the electrode terminal 151 and the microphone 152, the through-hole 1251 and the through-hole 1253 may be disposed on different side walls of the adapter housing 122. Based on this, the electrode terminal 151 may be at least partially disposed within the through-hole 1251, and the microphone 152 may be disposed within the accommodation cavity 124 and collect sounds (e.g., a user voice and an environmental sound) outside the earphone 10 via the through-hole 1253. In this way, by reasonably arranging the relative positions of the electrode terminals 151 and the microphone 152, the space of the accommodation chamber 124 is fully utilized, and the structure of the earphone 10 is thus more compact. Further, the earphone 10 may include a support assembly 17 at least partially disposed within the accommodation cavity 124, and the support assembly 17 may support and fix the electrode terminal 151 and the microphone 152 on a side wall of the adapter housing 122 where the through-hole 1251 is located and a side wall of the adapter housing 122 where the through-hole 1253 is located, respectively. In this way, it is not only conducive to preventing the electrode terminal 151 and the microphone 152 from separating from the adapter housing 122, but also conducive to increasing the waterproof and dustproof performance of the electronic component 15, making the structure of the earphone 10 simple and reliable.

By way of example, referring to FIG. 18, the flexible circuit board 16 may include a first circuit board section 161, a second circuit board section 162, and a third circuit board section 163 that are configured as an integral structure. The electrode terminal 151 is soldered to the first circuit board section 161, the second circuit board section 162 is bent with respect to the first circuit board section 161, and the microphone 152 is soldered to the third circuit board section 163 and bent with respect to the second circuit board section 162. In other words, after the flexible circuit board 16 bends twice, the first circuit board section 161, the second circuit board section 162, and the third circuit board section 163 may correspond to three sides of a six-sided structure, with any two of the three sides adjacent to each other. An end of the second circuit board section 162 away from the third circuit board section 163 is connected to the first circuit board section 161, and other portions of the second circuit board section 162 are not connected to the first circuit board section 161. This arrangement allows an operator, after assembling the flexible circuit board 16 and the electrode terminal 151 and microphone 152 inside the adapter housing 122, to press the end of the second circuit board section 162 that connects to the first circuit board section 161, aligning it as closely as possible with the first circuit board section 161 to avoid interference with the subsequently assembled support assembly 17.

In some embodiments, the adapter housing 122 may include two housings with a parting surface that is perpendicular to the extension direction of the electrode terminal 151, with the two housings fitting together to form the accommodation cavity 124. The support assembly 17 may be integrally formed with one of the two housings to support (or press against) the electrode terminal 151 and the microphone 152 respectively when the two housings are engaged. Alternatively, at least one of a first support member for supporting the electrode terminal 151 and a second support member for supporting the microphone 152 in the support assembly 17 may be independent of the adapter housing 122, allowing the first support member and the second support member to support (or press against) the electrode terminal 151 and the microphone 152 respectively when the two housings are engaged, or the support assembly 17 may be assembled after the two housings are engaged to support (or press against) the electrode terminal 151 and the microphone 152 respectively.

In some embodiments, at least a portion of the adapter housing 122 that corresponds to the accommodation cavity 124 is a complete housing structure. Among the first support member in the support assembly 17 for supporting the electrode terminals 151 and the second support member for supporting the microphone 152, at least the first support member may be independent of the adapter housing 122 to at least facilitate the assembly of the electrode terminal 151.

Exemplarily, referring to FIG. 18, the support assembly 17 may be independent of the adapter housing 122 and inserted into the accommodation cavity 124. In this way, since the support assembly 17, the electrode terminal 151, and the microphone 152 are independent of the adapter housing 122, respectively, they may be assembled according to an assembling sequence, thereby avoiding structural interference and making the assembly more efficient.

In some embodiments, the first support member for supporting the electrode terminal 151 and the second support member for supporting the microphone 152 in the support assembly 17 may be independent of the adapter housing 122, i.e., the first support member and the second support member are independent of each other to support (or press against) the electrode terminal 151 and the microphone 152, respectively, thereby enabling differential design of the first support member and the second support member in the support assembly 17 according to actual needs.

In some embodiments, the support assembly 17 may be a one-piece molded structural member, i.e., the first support member for supporting the electrode terminal 151 and the second support member for supporting the microphone 152 in the support assembly 17 are connected to each other, which is not only conducive to simplifying the structure of the support assembly 17, but also avoids the first support member and the second support member being too small and difficult to assemble. The support assembly 17 may be tightly fitted and fixed to a cavity wall of the accommodation cavity 124 after it is inserted into place, i.e., the support assembly 17 is inserted or withdrawn with a certain amount of damping, and the structure is simple and reliable. Correspondingly, the cavity wall of the accommodation cavity 124 may be provided with a guiding slot and a limiting slot with which the support assembly 17 fits. Of course, the support assembly 17 may be further glued to the cavity wall of the accommodation cavity 124 through a dispensing process.

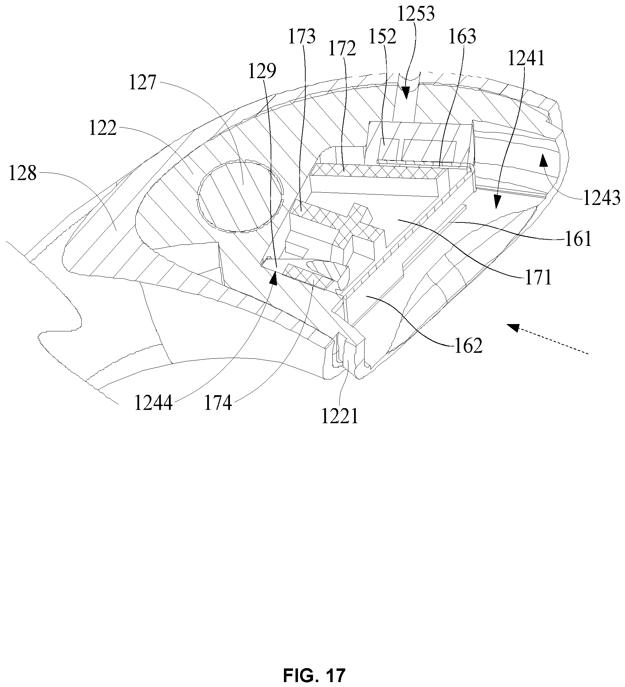

By way of example, referring to FIGS. 17 and 18, the dimensions of at least a portion of the support assembly 17 and the accommodation cavity 124 in at least one reference direction perpendicular to the insertion direction (e.g., the direction indicated by the arrows in FIGS. 17 and 18) of the support assembly 17 with respect to the holding chamber 124 may be set to taper to a smaller size along the foregoing insertion direction dimensions of at least a portion of the support assembly 17 and the accommodation cavity 124 in at least one reference direction are configured to decrease gradually along an insertion direction (e.g., the direction indicated by the arrows in FIGs. 17 and 18) of the support assembly 17 relative to the accommodation cavity 124, the at least one reference direction being perpendicular to the insertion direction, to facilitate the extension of the support assembly 17 into a gap between the electrode terminal 151 and the microphone 152. In other words, the dimension of at least a portion of the support assembly 17 in at least one reference direction perpendicular to the foregoing insertion direction may be configured to decrease gradually along the foregoing insertion direction, and the dimension of at least a portion of the accommodation cavity 124 in the same reference direction may be configured to decrease gradually along the insertion direction, and both of the dimensions have the same or similar trend of change, which facilitates the support assembly 17 to be tightly fitted and fixed on the cavity wall of the accommodation cavity 124 after being inserted in place.

Exemplarily, referring to FIGs. 16 to 18, the cavity wall of the accommodation cavity 124 may include a first cavity wall 1241 and a second cavity wall 1242 disposed side-by-side and spaced apart from each other, and a third cavity wall 1243 connecting the first cavity wall 1241 and the second cavity wall 1242. The through-hole 1251 may be provided in the first cavity wall 1241 and the through-hole 1253 may be provided in the third cavity wall 1243. Correspondingly, the support assembly 17 may include a base plate 171 and a first side plate 172 connected to the base plate 171, e.g., in an L-shaped structure. A main surface of the base plate 171 may be disposed opposite to the first cavity wall 1241 and support the electrode terminal 151, and a main surface of the first side plate 172 may be disposed opposite to the third cavity wall 1243 and support the microphone 152. Thus, after the electrode terminal 151 and the microphone 152 are assembled in place, the support assembly 17 is inserted into the accommodation cavity 124 in the above-described insertion direction, and after the support assembly 17 is inserted in place, the support assembly 17 may support the electrode terminal 151 and the microphone 152 through the base plate 171 and the first side plate 172, respectively.

Further, a positive projection of the microphone 152 on the first cavity wall 1241 may cover at least a portion of the electrode terminal 151, such as the microphone 152 covering a portion of the charging electrode terminal 1511, which facilitates a more compact structure of various parts.

In some embodiments, dimensions of at least a portion of the base plate 171 and the accommodation cavity 124 in a first reference direction RD1 are configured to decrease gradually along the above-described insertion direction, the first reference direction RD1 being perpendicular to the insertion direction and parallel to the main surface of the base plate 171. In other words, a dimension of a front end or a rear end of the base plate 171 in the first reference direction RD1 or a dimension of a portion between the front end and the rear end in the first reference direction RD1 may be kept unchanged along the aforementioned insertion direction. Meanwhile, dimensions of the first side plate 172 and the accommodation cavity 124 in a second reference direction RD2, which is perpendicular to the insertion direction and parallel to the main surface of the first side plate 172, may be configured to remain unchanged along the insertion direction.

In some embodiments, dimensions of at least a portion of the first side plate 172 and the accommodation cavity 124 in the second reference direction RD2 are configured to decrease gradually along the above-described insertion direction, the second reference direction RD2 being perpendicular to the insertion direction and parallel to the main surface of the first side plate 172. In other words, a dimension of a front end or a rear end of the first side plate 172 in the second reference direction RD2 or a dimension of a portion between the front end and the rear end in the second reference direction RD2 may be kept unchanged along the aforementioned insertion direction. Meanwhile, dimensions of the base plate 171 and the accommodation cavity 124 in the first second reference direction RD1, which is perpendicular to the insertion direction and parallel to the main surface of the base plate 171, may be configured to remain unchanged along the insertion direction.

In some embodiments, dimensions of at least a portion of the base plate 171 and the accommodating cavity 124 in the first reference direction RD1 are configured to decrease gradually along the insertion direction, the first reference direction RD1 being perpendicular to the insertion direction and parallel to the main surface of the base plate 171, and dimensions of at least a portion of the first side plate 172 and the accommodating cavity 124 in the second reference direction RD2 are configured to decrease gradually along the insertion direction, the second reference direction RD2 being perpendicular to the insertion direction and parallel to the main surface of the first side plate 172.

It should be noted that for the support assembly 17, the dimension of the base plate 171 in the first reference direction RD1 may be simply regarded as a width of the base plate 171, and the dimension of the first side plate 172 in the second reference direction RD2 may be simply regarded as a height of the first side plate 172.

By way of example, referring to FIG. 16 to FIG. 18, the support assembly 17 may include a second side plate 173 connected to the base plate 171, and the second side plate 173 and the first side plate 172 are disposed side by side with each other and spaced apart on a same side of the base plate 171. The second side plate 173 abuts against the second cavity wall 1242 to provide a support force toward the electrode terminal 151 for the base plate 171, thereby improving the support effect of the support assembly 17 on the electrode terminal 151. In the embodiment in which the electrode terminal 151 includes a charging positive terminal 1511 and a charging negative terminal 1512 spaced apart from each other along a direction perpendicular to the above-described insertion direction, the second side plate 173 may be disposed between the charging positive terminal 1511 and the charging negative terminal 1512, so as to make forces applied on the various portions of the electrode terminal 151 uniform, which is conducive to improving the support effect of the support assembly 17 on the electrode terminal 151.

By way of example, referring to FIG. 16 through FIG. 18, the cavity wall of the accommodation cavity 124 may include a fourth cavity wall 1244 that connects the first cavity wall 1241 and the second cavity wall 1242 and is arranged opposite to the third cavity wall 1243. The first cavity wall 1241 and the second cavity wall 1242 may be configured as planar structures substantially parallel to each other, and the third cavity wall 1243 and the fourth cavity wall 1244 may be configured as curved structures substantially flared out from each other to maximize a volume of the accommodation cavity 124 when a volume of the adapter housing 122 is limited. Correspondingly, the support assembly 17 may include a third side plate 174 connected to the base plate 171, the first side plate 172 and the third side plate 174 are disposed on two side edges of the base plate 171, respectively, in a direction perpendicular to the insertion direction described above, and the second side plate 173 is disposed between the first side plate 172 and the third side plate 174. The third side plate 174 abuts against the fourth cavity wall 1244 to provide a support force toward the microphone 152 for the first side plate 172, which is conducive to improving the support effect of the support assembly 17 on the microphone 152.

Furthermore, for the base plate 171, a height of the second side plate 173 may be greater than a height of the first side plate 172 and a height of the third side plate 174, respectively, so as to allow for the second side plate 173 to abut against the second cavity wall 1242 and the third side plate 174 to abut against the fourth cavity wall 1244. The second side plate 173 and the third side plate 174 do not come into direct contact with any one of the electrode terminal 151 or the microphone 152, allowing them to guide the support assembly 17 during its insertion into the accommodation cavity 124. Accordingly, since the height of the second side plate 173 is relatively greater, the support assembly 17 may include reinforcing ribs 175 connecting the second side plate 173 and the base plate 171. The reinforcing ribs 175 may be positioned on opposite sides of the second side plate 173, facing the first side plate 172 and the third side plate 174.

Exemplarily, referring to FIG.15 to FIG.17 and FIG.9, the hook-like structure 12 may include an elastic metal wire 121, an adapter housing 122, a battery housing 123, and a conductor 129. Two ends of the elastic metal wire 121 and the conductor 129 may be respectively connected to the adapter housing 122 and the battery housing 123, such that the conductor 129 extends along the elastic metal wire 121 and is threaded within the adapter housing 122 and the battery housing 123. Of course, the conductor 129 may also be threaded within a preset threading channel after the elastic metal wire 121 is connected to the adapter housing 122 and the battery housing 123. A battery 14 may be disposed within the battery housing 123 and connected to the flexible circuit board 16 through the conductor 129, which in turn causes the battery 14 to be connected to the main control circuit board 13 through the flexible circuit board 16, thereby simplifying the alignment structure of the earphone 10 and reducing production costs. In other words, components such as the electrode terminal 151, the microphone 152, and the battery 14 in the hook-like structure 12 may be connected to the main control circuit board 13 via the flexible circuit board 16.

Furthermore, the flexible cover layer 128 may at least wrap around the exposed portion of the flexible metal wire 121 and the conductor 129, as well as at least a portion of the battery 123, which prevents conductor 129 from being exposed, thereby improving the appearance of the earphone 10.

It should be noted that the adapter housing 122 may also be structured as a part of the core housing 111. For example, the adapter housing 122 is integrally molded with the inner core housing 1111. As another example, a portion of the adapter housing 122 is integrally molded with the inner core housing 1111 and the remaining portion is integrally molded with the outer core housing 1112. A portion of the hook-like structure 12 other than the adapter housing 122 (e.g., an end of the elastic metal wire 121 that is away from the battery housing 123, the battery housing 123, etc.) is fixedly connected (e.g., plug-in fixation) to the core module 11 having the adapter housing 122 at a position of the adapter housing 122. Positions of the structural components such as the electrode terminal 151, the microphone 152, and the magnet 127 are adjusted accordingly, which will not be described herein.

Based on the foregoing description, the present application provides a housing assembly which may include a plastic housing, a metal function pattern, and a silicone overlay. The metal function pattern is provided on an outer side of the plastic housing. The silicone overlay covers a side of the metal function pattern facing away from the plastic housing and a region of the plastic housing not covered by the metal function pattern by means of one-piece injection molding, glue connection, or the like. Thus, compared to the metal function pattern being placed on an inner side of the plastic housing away from the silicone overlay, positioning the metal function pattern on an outer side of the plastic housing toward the silicone overlay allows it to be further away from the interference of other electronic components within the housing assembly or closer to an external signal trigger source, thereby increasing an anti-interference ability and sensitivity of the metal function pattern. A structure of the plastic housing may be the same as or similar to that of the core housing 111 or the outer core housing 1112, and a structure of the silicone overlay may be the same as or similar to that of the flexible cladding 1132, which will not be repeated here.

In some embodiments, the metal function pattern may be configured as an antenna pattern 1141 or a touch pattern 1142. The antenna pattern 1141 may be arranged on the outer side of the plastic housing, which may increase a spacing between the antenna pattern 1141 and other electronic components in the plastic housing, i.e., increase the antenna clearance area, thereby increasing the anti-interference ability of the antenna pattern 1141. The touch pattern 1142 may be arranged on the outer side of the plastic housing, which may shorten a spacing between the touch pattern 1142 and the external signal trigger source (e.g., a finger of the user), i.e., reduce a touching spacing, thereby increasing the sensitivity of the touch pattern 1142 to user triggers.

In some embodiments, the metal function pattern may include an antenna pattern 1141 and a touch pattern 1142, and the antenna pattern 1141 may surround a periphery of the touch pattern 1142 to fully utilize the space on the outer side of the plastic housing. The antenna pattern 1141 may be configured as a U-shape, and the touch pattern 1142 may be configured as a square shape.

In some embodiments, a thickness of the silicone overlay may be smaller than a thickness of the plastic housing to further increase the anti-interference and sensitivity of the metal function pattern while the silicone overlay covers and protects the metal function pattern, as well as to reduce a volume of the housing assembly.

Exemplarily, the housing assembly may function as a core housing that houses the speaker 112. The relative positional relationship between the plastic housing and the plastic cladding may be the same or similar to that between the core housing 111 and the flexible cladding 1132, which will not be repeated herein.

Further, the housing assembly may be applied to other electronic devices such as smart glasses in addition to the earphone 10. The electronic device may include a core module provided with a speaker 112, and may also include a main control circuit board 13, and a speaker 112 and a battery 14 connected to the main control circuit board 13, respectively. The housing assembly may be configured to house at least one of the electronic components, such as the speaker 112, the main control circuit board 13, the battery 14, or the like. The housing assembly may be configured to support the speaker 112 in the electronic device in a corresponding wearing position. It should be noted that for electronic devices such as earphones and smart glasses based on the principle of bone conduction, the speaker 112 may be adaptively configured as a bone conduction speaker, and the basic structure of the bone conduction speaker is well known to those skilled in the art, which will not be repeated herein.

The present disclosure provides a housing assembly, the housing assembly may include a first housing, an electrode terminal 151, a magnet 127, and a flexible cover layer 128. The electrode terminal 151 and the magnet 127 may be exposed on a same side of the first housing. The flexible cover layer 128 has a hardness less than a hardness of the first housing and covers the first housing and the magnet 127 such that the magnet 127 is not exposed and the electrode terminal 151 is exposed. In this way, compared to the magnet 127 being provided in the first housing, the present technical solution allows the magnet 127 to be located closer to the outside world toward which an exposed end of the electrode terminal 151 is facing, thereby reducing a spacing between the magnet 127 and a magnetic suction structure in a charging device (e.g., a charging case) that cooperates with the magnet 127, or reducing a spacing between the magnet 127 and a Hall sensor that cooperates with the magnet 127, which is conducive to improving the reliability of functions such as charging, detection, or the like, of the housing assembly. Thus, the housing assembly can be applied to both powered devices such as an earphone 10, smart glasses, and charging devices such as a charging case. In other words, the electronic device can be a powered device or a charging device. For ease of description, the first housing may be the adapter housing 122.

In some embodiments, the first housing may be provided with through-holes 1251 and a blind hole 1252. The electrode terminal 151 may be provided at least partially within the through-holes 1251, and the magnet 127 may be provided at least partially within the blind hole 1252 and exposed via an open end of the blind hole 1252. This arrangement is not only beneficial to reducing a thickness of the first housing in the region where the magnet 127 is located, but also beneficial to improving the appearance of the first housing in the region where the magnet 127 is located. Of course, the blind hole 1252 may also be configured as a through-hole.

In some embodiments, an outer side of the first housing may be provided with a tab 126. The tab 126 may be arranged adjacent to the magnet 127 and protrude out of the first housing around the magnet 127, and the through-holes 1251 further penetrate through the tab 126 to allow a plurality of electrode terminals 151 to be exposed at the tab 126. In this way, the first housing, which is not flat due to having a certain curvature, is made locally flat by the tab 126 so as to facilitate the setting of the electrode terminals 151. The tab 126 may be configured as an elongated shape, with a simple and reliable structure.

In some embodiments, the housing assembly may include a flexible circuit board 16, with the electrode terminals 151 connected to the flexible circuit board 16 to simplify the alignment structure of the electrode terminals 151. The first housing may be provided with an accommodation cavity 124, at least a portion of the flexible circuit board 16 may be disposed within the accommodation cavity 124, the through-holes 1251 is in communication with the accommodation cavity 124, and the blind hole 1252 is not in communication with the accommodation cavity 124, so as to improve the waterproof and dustproof performance of the first housing.

In some embodiments, the housing assembly may include a second housing, an elastic metal wire 121, and a conductor 129, and two ends of the elastic metal wire 121 and the conductor 129 may be respectively connected to the first housing and the second housing, such that the conductor 129 extends along the elastic metal wire 121 and is threaded within the first housing and the second housing. For ease of description, the second housing may be a battery housing 123. Further, a battery 14 is provided in the second housing, and the battery 14 is connected to the flexible circuit board 16 via the conductor 129, i.e., both the battery 14 and the electrode terminal 151 are connected to the flexible circuit board 16 to simplify the alignment structure. Correspondingly, the flexible cover layer 128 at least wraps around the flexible metal wire 121 and the conductor 129 so as to prevent the conductor 129 form being exposed.

In some embodiments, the housing assembly may be applied to the earphones 10 and may include a third housing for housing the speaker 112, the third housing being plugged and fixed to the first housing. For ease of description, the third housing may be the core housing 111. The present disclosure provides a housing assembly, wherein the housing assembly may include a first housing, an electrode terminal 151, a microphone 152, and a support assembly 17. The first housing may be provided with an accommodating cavity 124, and a through-hole 1251 and a through-hole 1253 connected to the accommodating cavity 124, respectively, the through-hole 1251 and the through-hole 1253 being disposed on different sidewalls of the first housing. The electrode terminal 151 may be at least partially disposed within the through-hole 1251, the microphone 152 may be provided within the accommodation cavity 124 and configured to collect a sound outside the housing assembly via the through-hole 1253.

Further, the support assembly 17 may be disposed within the accommodation cavity 124 and may support and fix the electrode terminal 151 and the microphone 152 to the sidewalls corresponding to the through-hole 1251 and the through-hole 1253, respectively. This arrangement is not only conducive to preventing the electrode terminal 151 and the microphone 152 from separating from the first housing, but also conducive to increasing the waterproof and dustproof performance at the electrode terminal 151 and the microphone 152, making the structure simple and reliable. For ease of description, the first housing may be the adapter housing 122, the core housing 111, or a housing structure after the core housing 111 and the adapter housing 122 are integrally molded.

In some embodiments, the support assembly 17 may be separated from the first housing and inserted into the accommodation cavity 124.

In some embodiments, the support assembly 17 may be a one-piece molded structural member.

In some embodiments, the housing assembly may be applied to the earphone 10 and may include a third housing for housing the speaker 112, the third housing being plugged and fixed to the first housing. The first housing may be the adapter housing 122 and the third housing may be the core housing 111.

Further, the housing assembly may be applied to other electronic devices such as smart glasses in addition to the earphone 10. The electronic device may include a main control circuit board 13, and a speaker 112 and a battery 14 connected to the main control circuit board 13, respectively. The housing assembly may be configured to house at least one of the speaker 112, the main control circuit board 13, the battery 14, or the like, and may also be configured to support the speaker 112 in the electronic device in a corresponding wearing position. It should be noted that for electronic devices such as earphones and smart glasses based on the principle of bone conduction, the speaker 112 may be adaptively configured as a bone conduction speaker, and the basic structure of the bone conduction speaker is well known to those skilled in the art, which will not be repeated herein.

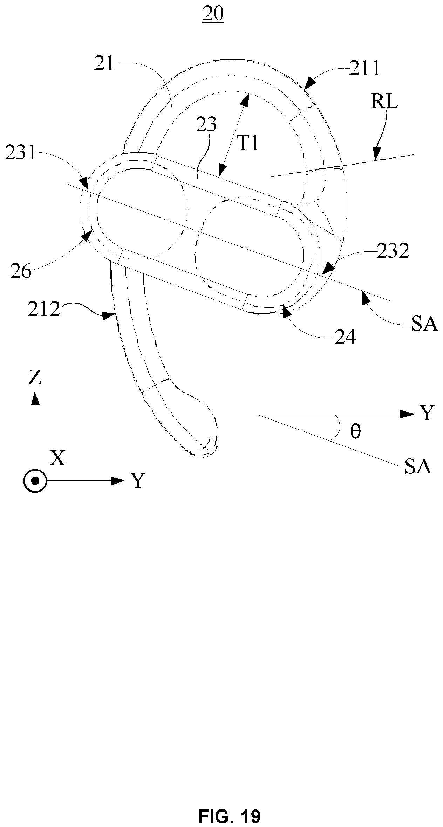

Hereinafter, any of the embodiments or combinations thereof described in FIG.19 to FIG.28 are relevant to the priority. At least a portion of the structural features, the relative positions or connection relationships between technical features, and the functions of technical features in any embodiment or combination described in FIGs 2 to 18 are the same as or similar to those in any embodiment or combination described in FIGs 19 to 28 For example, in any embodiment or combination of embodiments described in FIGs 2 to 18, the structures of the "earphone10," "core module 11," "hook-like structure 12," "speaker 112," "main control circuit board 13," "battery 14," etc., are the same as or similar to the structures of the "earphone 20," "holding portion 23," "hook-like portion 21," "core 24," "main board 25," "battery 26", etc., in any embodiment or combination of embodiments described in FIGs 19 to 28. The relative positions and connection relationships between any two of them are also the same as or similar to each other. As another example, the relative position between the "free end FE" and "connecting end CE" in any embodiment or combination described in FIGs 2 to 18 is the same as or similar to that between the "free end 231" and "connecting end 232" in any embodiment or combination described in FIGs 19 to 28. Similarly, the relative position between the "adapter housing 122" and "battery housing 123" in FIGs 2 to 18 is the same or similar to the relative position between the "connecting segment 211" and "free segment 212" in any embodiment or combination described in FIGs 19 to 28. As yet another example, the relative position or connection relationship between the "flexible embedding block 1131" and "flexible cover layer 1132" and "core housing 111" in any embodiment or combination described in FIGs 2 to 18, along with their functions, is the same as or similar to the description "for the composite structure of sponge and silicone, the sponge is primarily located at the free end 231 of the holding portion 23 to allow the holding portion 23 to contact the ear through the sponge and the silicone on it, i.e., a region where the sponge is located within the holding portion 23 is softer than other regions" in any embodiment or combination described in FIGs 19 to 28. It should be noted that due to the numerous technical features and the complex relative positions or connection relationships between them, it is not possible to list all of them here. However, those skilled in the art should be aware of the corresponding relationships of the unlisted technical features, their relative positions or connection relationships, and the functions of the technical features from a holistic perspective.

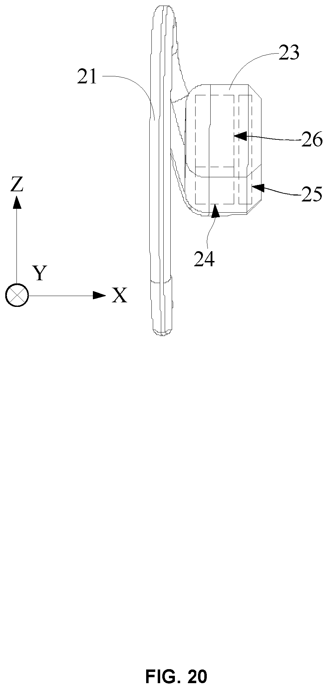

Referring to FIG. 19 and FIG. 20, an earphone 20 may include a hook-like portion 21 and a holding portion 23 connected to the hook-like portion 21. At least a portion of the hook-like portion 21 is configured to be disposed between a rear side of an ear and the head of a user, and the holding portion 23 is configured to contact a front side of the ear to allow the hook-like portion 21 and the holding portion 23 to jointly clamp the ear. In other words, the hook-like portion 21 and the holding portion 23 may be non-coplanar in three dimensional space. The holding portion 23 may have a thickness direction, a length direction, and a width direction that are orthogonal to each other. The thickness direction is defined as a direction in which the holding portion 23 is close to or away from the ear in a wearing state, and a length of the holding portion 23 in the the aforementioned length direction may be greater than or equal to a width of the holding portion 23 in the aforementioned width direction. Based on this, the hook-like portion 21 may include a connecting segment 211 connected to the holding portion 23 and a free segment 212 connected to the connecting segment 211, and the connecting segment 211 and the free segment 212 are located on opposite sides of the holding portion 23 in the aforementioned width direction, respectively. Further, in a reference plane (e.g., the plane where the paper surface is located) perpendicular to the aforementioned thickness direction, a maximum spacing (e.g., indicated by T1 in FIG. 19) between the connecting segment 211 and the holding portion 23 in the aforementioned width direction may be between 10 mm and 17 mm. Preferably, the aforementioned maximum spacing may be between 11 mm and 14 mm. This configuration not only increases a distance between a center of gravity of the holding portion 23 and an upper auricular root of the ear (i.e., lower the center of gravity of the holding portion 23 in the wearing state), but also increases a distance between a center of mass of the holding portion 23 and an antihelix of ear (i.e., increase the rotational inertia of the earphone 20 relative to the antihelix or the upper auricular root during movements such as shaking the head side to side, nodding, and jumping), thereby improving the stability of the earphone 20 in the wearing state.

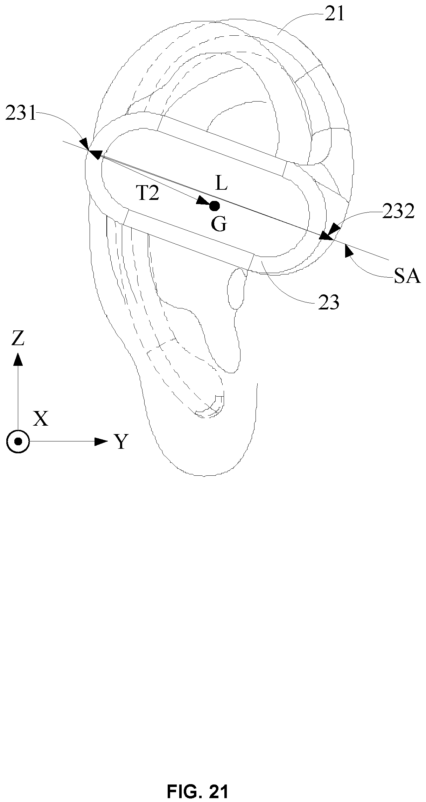

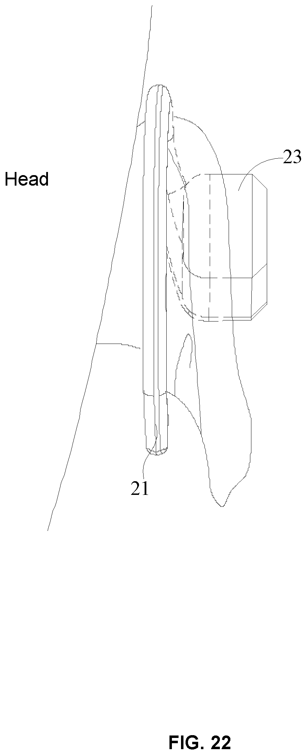

It should be noted that it is possible to produce a simulator (e.g., GRAS 45BC KEMAR) with a head and its (left and right) ears based on ANSI: S3.36, S3.25 and IEC: 60318-7 standards. Thus, in the present disclosure, expressions such as "the user wears the earphone," "the earphone is in a wearing state," etc., refer to the earphone described in the present disclosure being worn on the ears of the aforementioned simulator. Based on this, the "wearing state" described in the present disclosure refers to a normal wearing state after the earphone is worn on the ears of the aforementioned simulator. For ease of description, the aforementioned normal wearing state may be further illustrated from the front side, back side and other views, such as the normal wearing state shown in FIG. 21 and FIG. 22. Of course, due to the individual differences of different users, the actual wearing state of the earphone 20 may have some differences compared with the aforementioned normal wearing state. Furthermore, the center of gravity described in the present disclosure refers to a point where the resultant force of gravity acts on every infinitesimal part of an object, and the center of mass described in the present disclosure refers to an imaginary point where the mass of a material system is considered to be concentrated. Generally, it may be simply assumed that a gravitational field of our environment is uniform, and thus the center of mass and the center of gravity may be regarded as coinciding. Based on this, a plumb line may be used to identify the center of gravity of an object (e.g., the holding portion 23). In this regard, in order to facilitate the measurement of the center of gravity of the holding portion 23, the holding portion 23 may be first detached from the earphone 20 along a reference line RL shown in FIG. 19. Based on this, the reference line RL may be a dividing line between the hook-like portion 21 and the holding portion 23. For example, if an elastic metal wire is disposed within the hook-like portion 21, the holding portion 23 is a plastic part, and the hook-like portion 21 and the holding portion 23 are connected through a plug-in connection, the holding portion 23 may be removed from the earphone 20 by destroying the plug-in connection between the hook-like portion 21 and the holding portion 23. As another example, if the hook-like portion 21 and the holding portion 23 are plastic parts respectively, and the two are connected by at least one of the manners of gluing, snap-fitting, and plugging, then by destroying the connection relationship between the two, the holding portion 23 may be removed from the earphones 20.

Furthermore, the earphone 20 may also include a core 24, a main board 25, and a battery 26. The core 24 is mainly configured to convert an electrical signal into a corresponding mechanical vibration (i.e., sound production), and may be electrically connected to the main board 25 and the battery 26 through a corresponding conductor. The main board 25 is mainly configured to control the sound production of the core 24. The battery 26 is mainly configured to provide electrical energy to the sound production of the core 24. Of course, the earphone 20 described in the present disclosure may also include a microphone and a transducer such as a pickup, and may further include a communication device such as Bluetooth, which is electrically connected to the main board 25 and the battery 26 through a corresponding conductor to realize a corresponding function. Furthermore, when the earphone 20 is in the wearing state, the holding portion 23 is mainly located on the front side of the ear of the user as shown in FIG. 21, allowing the holding portion 23 not only to accommodate the core 24 but also to incorporate a functional button for user interaction with the earphone 20. Based on this, the main board 25 may also be positioned within the holding portion 23 to shorten a wiring distance between the core 24 and other components such as the functional button and the main board 25.

By way of example, referring to FIGs. 21 and 19, in the wearing state and when viewed along the direction of the coronal axis of the human body, an angle (e.g., the angle θ) between a length direction of the holding portion 23 and the direction of the sagittal axis of the human body may be between 15° and 60°. Preferably, the aforementioned angle may be between 25° and 45°. Referring to FIGs. 21 and 19, since the holding portion 23 is generally configured as a regular structure (e.g., a profile of the holding portion 23 is configured as a rounded rectangle), the holding portion 23 is configured symmetrically with respect to at least an axis of symmetry (e.g., the axis indicated by the dotted line SA) parallel to the length direction of the holding portion 23 in the profile, that is to say, the angle θ may be the angle between the axis of symmetry SA and the sagittal axis Y of the human body.

In some embodiments, as shown in FIG. 19, the holding portion 23 has a free end 231 that is not connected to the hook-like portion 21 and a connecting end 232 that is connected to the hook-like portion 21. Compared to the connecting end 232 of the holding portion 23, the free end 231 of the holding portion 23 may be located further away from an end of the free segment 212 of the hook-like portion 21 away from the connecting segment 211. In this arrangement, as shown in FIG. 21, in the wearing state and viewed in the direction in which the coronal axis of the human body is located, the free end 231 of the holding portion 23 that is not connected to the hook-like portion 21 is closer to a top of the head of the user than the connecting end 232 of the holding portion 23 that is connected to the hook-like portion 21. In this manner, the holding portion 23 is provided at an inclined position with respect to the sagittal axis of the human body so that the holding portion 23 is inclined toward the external ear canal of the ear in the wearing state to increase the distance between the center of gravity of the holding portion 23 and the upper auricular root of the ear, i.e., to lower the center of gravity of the holding portion 23 in the wearing state, which is conducive to improving the stability of the earphone 20 during wearing.

Exemplarily, referring to FIG. 21, in the wearing state, the free end 231 of the holding portion 23 is in contact with the antihelix 105 to cause the holding portion 23 to be pressed against the ear at least at the antihelix 105. When the holding portion 23 projects orthogonally in the direction of the coronal axis of the human body onto the ear, the holding portion partially overlaps with the cavum conchae 102 of the ear, i.e., the cavum conchae 102 is at least partially covered by the holding portion 23. Preferably, in the wearing state, when the holding portion 23 projects orthogonally in the direction of the coronal axis of the human body onto the ear, the holding portion 23 is at least partially offset from the external ear canal, i.e., the external ear canal is at least partially uncovered by the holding portion 23 to "liberate" the external ear canal. In this way, compared to the related art in which the cymba conchae 103 of the ear is at least partially covered by the holding portion 23, in the present embodiment, the cavum conchae 102 of the ear is at least partially covered by the holding portion 23. In other words, the holding portion 23 is tilted towards the external ear canal of the ear in the wearing state, so that the distance between the center of mass of the holding portion 23 and the antihelix 105 of the ear is increased, i.e., the rotational inertia of the earphone 20 with respect to the antihelix 105 of the ear or the upper auricular root of the ear is increased when the user performs motions such as shaking the head from side to side, raising the head and bouncing up and down, which is conducive to improving the stability of the earphone 20 during wearing.

By way of example, referring to FIG. 21, in a reference plane (e.g., the YZ plane) in which the sagittal plane of the human body is located, a ratio of a distance (indicated by T2) between the center of gravity (indicated by point G in FIG. 21) of the holding portion 23 and the free end 231 of the holding portion 23 to a length (indicated by the double-arrowed line segment L in FIG. 21) of the holding portion 23 may be between 0.5 and 0.75. In this manner, under other conditions (e.g., the inclined arrangement of the holding portion 23) are maintained unchanged, the center of gravity of the holding portion 23 is farther away from the free end 231 of the holding portion 23, so that the distance between the center of gravity of the holding portion 23 and the antihelix 105 of the ear is increased, that is to say, the rotational inertia of the earphone 20 with respect to the antihelix 105 of the ear or the upper auricular root is increased during the user's movements such as shaking the head from side to side, lowering the head, raising the head and bouncing up and down, which is conducive to improving the stability of the earphone 20 in terms of wearing. The reference plane where the sagittal plane of the human body is located may be defined as a reference plane perpendicular to a thickness direction of the holding portion 23.

Further, the length (indicated by the double-arrowed line segment L in FIG. 21) of the holding portion 23 may be between 22 mm and 35 mm. Preferably, the aforementioned length may be between 25mm and 32mm. If the length of the holding portion 23 is too short, for example, if the length is so short that the holding portion 23 is unable to contact the antihelix 105 of the ear, the holding portion 23 may not jointly clamp the ear of the user with the hook-like portion 21. If the length of the holding portion 23 is too long, for example, if the length is so long that a large portion of the holding portion 23 extends out of the antihelix 105 of the ear, it may easily cause the user or a third party to touch the earphone 20, which is unfavorable to the reliability of the earphone 20 during wearing.

Further, in a positive direction, along the length direction of the holding portion 23, from the free end 231 of the holding portion 23 to the connecting end 232 of the holding portion 23, a ratio of a width of the holding portion 23 at 3/4 of its length and a width of the holding portion 23 at 1/4 of its length may be between 1 and 2. Preferably, the aforementioned ratio may be between 1 and 1.3. In this way, it is advantageous to cause the center of gravity (i.e., the center of mass) of the holding portion 23 to be shifted toward the connecting end 232 thereof, thereby increasing the distance between the center of gravity of the holding portion 23 and the upper auricular root of the ear, as well as the distance between the center of mass of the holding portion 23 and the antihelix 105 of the ear.

Based on the above description, the core 24 may be provided in the holding portion 23, and the holding portion 23 may also be tilted towards the external ear canal of the ear in the wearing state, so that the core 24 may be located at the connecting end 232 of the holding portion 23 in order to shorten the distance between the core 24 (e.g., specifically, an acoustic outlet hole on the holding portion 23) and the external ear canal of the ear, which is conducive to increasing intensity of a sound emitted from the core 24 heard by the user. Furthermore, if the connecting end 232 of the holding portion 23 is configured wider than the free end 231 of the holding portion 23, an allowable volume of the core 24 arranged at the connecting end 232 of the holding portion 23 may be increased, which is conducive to increasing the intensity of the sound emitted by the core 24.

Exemplarily, the battery 26 may be disposed in the hook-like portion 21 (not shown), specifically, the battery 26 may be disposed close to the free segment 212 of the hook-like portion 21, which is conducive to increasing a capacity of the battery 26 and balancing a weight distribution of the earphone 20.

By way of example, e.g., FIG.19 and FIG.20, the core 24, the main board 25, and the battery 26 may be disposed within the holding portion 23. In this way, without the interference of the battery 26, the hook-like portion 21 may be configured as a contoured structure that fits better with the rear side of the ear (and the head), which is conducive to improving the stability of the earphone 20 during wearing. The core 24 may be disposed at the connecting end 232 of the holding portion 23 and the battery 26 may be disposed at the free end 231 of the holding portion 23. The position of the center of gravity of the holding portion 23 may be adjusted by changing parameters such as the volume of the core 24, the capacity of the battery 26, or the like. For example, the battery 26 is closer to the free end 231 compared to the core 24, and a dimension of the core 24 in the width direction of the holding portion 23 is larger than a dimension of the battery 26 in the aforementioned width direction.

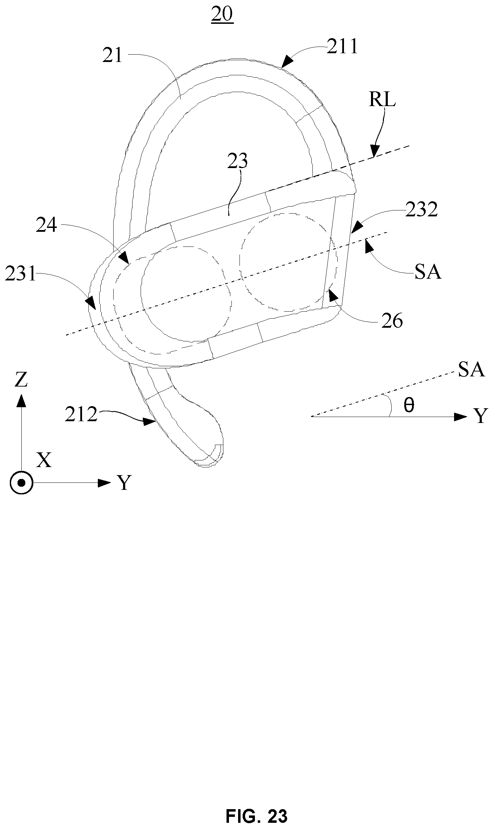

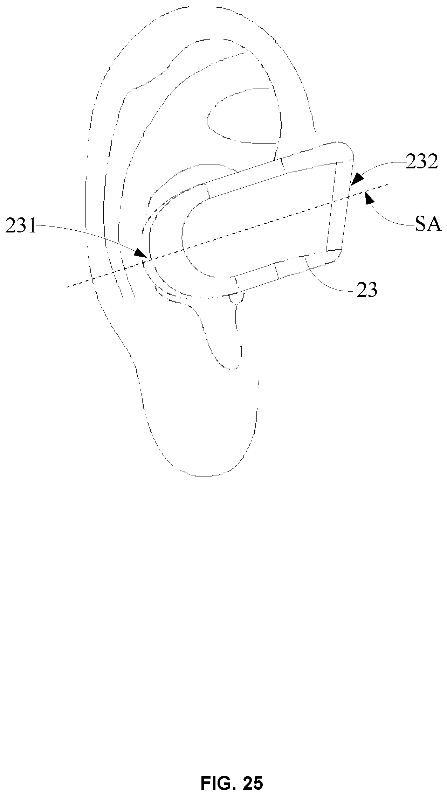

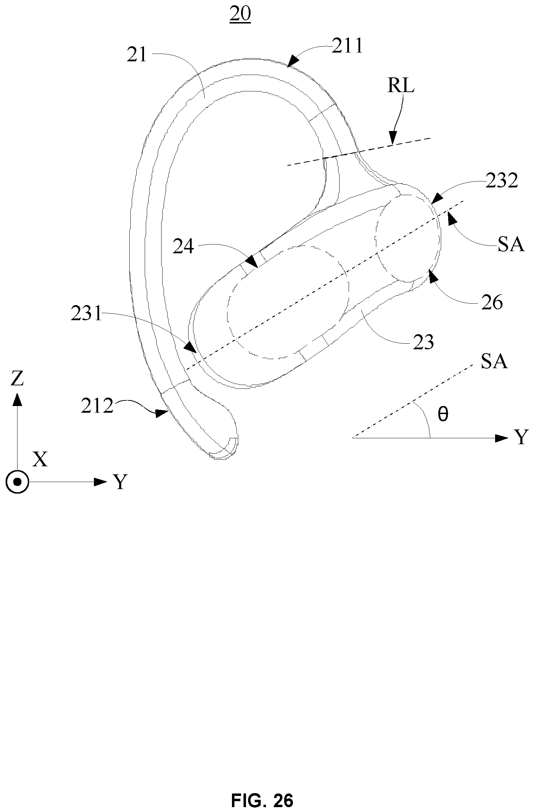

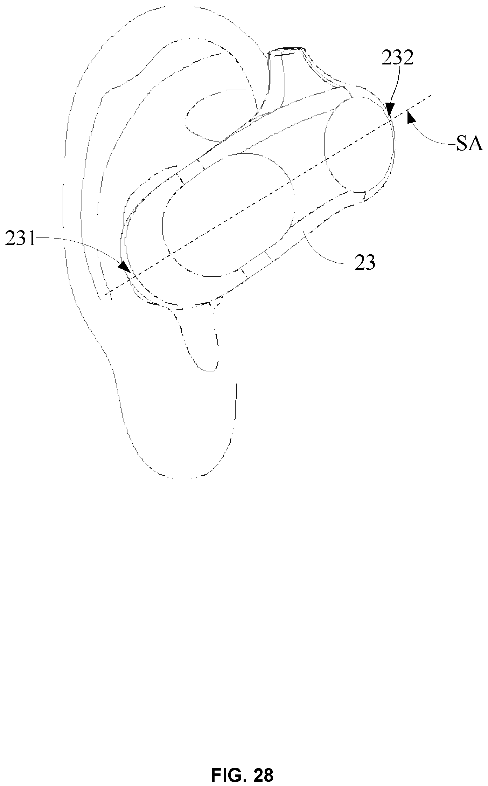

In some other embodiments, such as FIG. 23 or FIG. 26, compared to the connecting end 232 of the holding portion 23, the free end 231 of the holding portion 23 may be closer to an end of the connecting segment 211 away from the free segment 212 of the hook-like portion 21. In this arrangement, in the wearing state and when viewed in the direction of the coronal axis of the human body, as illustrated in FIG.25 or FIG.28, the free end 231 of the holding portion 23 that is not connected to the hook-like portion 21 is closer to the top of the head of the user than the connecting end 232 of the holding portion 23 that is connected to the hook-like portion 21. In this way, the holding portion 23 is arranged inclined relative to the sagittal axis of the human body to increase the distance between the center of gravity of the holding portion 23 and the upper auricular root of the ear, i.e., to lower the center of gravity of the holding portion 23 in the state of wearing, thus is conducive to improving the stability of the earphone 20 during wearing.

By way of example, in the wearing state, the free end 231 of the holding portion 23 that is not connected to the hook-like portion 21 may extend into the cavum conchae 102 of the ear to allow the holding portion 23 to be inclined and set with respect to the sagittal axis of the human body. Similarly to the above embodiment, the core 24, the main board 25, and the battery 26 are disposed within the holding portion 23 to allow for the contoured structure of the hook-like portion 21 to not interfere with the battery 26. The main difference with the above embodiment is that the core 24 may be closer to the free end 231 as compared to the battery 26 to shorten the distance between the core 24 (specifically, the acoustic outlet hole on the holding portion 23) and the external ear canal of the ear, which increases the intensity of the sound from the core 24 heard by the user. It should be noted that in the present embodiment, although the free end 231 of the holding portion 23 is arranged to extend into the cavum conchae 102 of the ear, the holding portion 23 is configured not to extend into the external ear canal of the ear to "liberate" the external ear canal. Taking into account the differences between different users, in the wearing state, the holding portion 23 may cover a portion of the external ear canal, however, this scenario should not be confused with a scenario in which the holding portion 23 is directly inserted into the external ear canal, i.e., the two scenarios are different.

Furthermore, the free end 231 of the holding portion 23 may abut against or press against the cavum conchae 102 of the ear. For example, the holding portion 23 abuts against the cavum conchae 102 of the ear in the length direction the holding portion 23. As another example, the holding portion 23 presses against the cavum conchae 102 of the ear in the thickness direction the holding portion 23. In this manner, in addition to a clamping force and a friction force exerted by the hook-like portion 21 on the rear side of the ear, the holding portion 23 may also form an abutting force or the like against the cavum conchae 102 of the ear to improve the stability of the earphone 20 during wearing.

Furthermore, the inventors of the present disclosure have found in their long term research and development work that, when the free end 231 of the holding portion 23 is arranged to extend into the cavum conchae 102 of the ear, the holding portion 23 may at least partially cover the tragus of the ear, and the tragus of the ear generally protrudes toward the front side of the ear along a direction facing away from the head of the user, making the tragus easy to be clamped by the holding portion 23, thereby causing discomfort when wearing the earphone 20 for a long period. Therefore, the holding portion 23 is configured to avoid pressing the tragus of the ear in the wearing state, thereby improving the comfort of the earphone 20 during wearing.

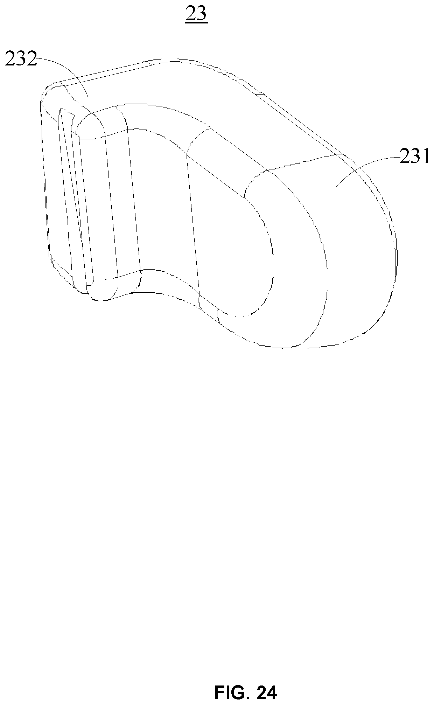

By way of example, referring to FIG. 23 and FIG. 24, on an inner side of the holding portion 23 facing toward the ear, the connecting end 232 of the holding portion 23 partially protrudes with respect to the free end 231 so that the inner side of the holding portion 23 toward the ear portion is in whole is not planar. In the wearing state, the connecting end 232 of the holding portion 23 is in contact with the skin around the tragus such that other regions of the holding portion 23 avoid pressing the tragus of the ear. Further, since the connecting end 232 of the holding portion 23 is partially protruding with respect to the free end 231, and the battery 26 is disposed at the connecting end 232 of the holding portion 23, a dimension of the battery 26 in a thickness direction of the holding portion 23 may be increased, which is conducive to increasing the capacity of the battery 26, thereby prolonging the standby/usage time of the earphone 20.

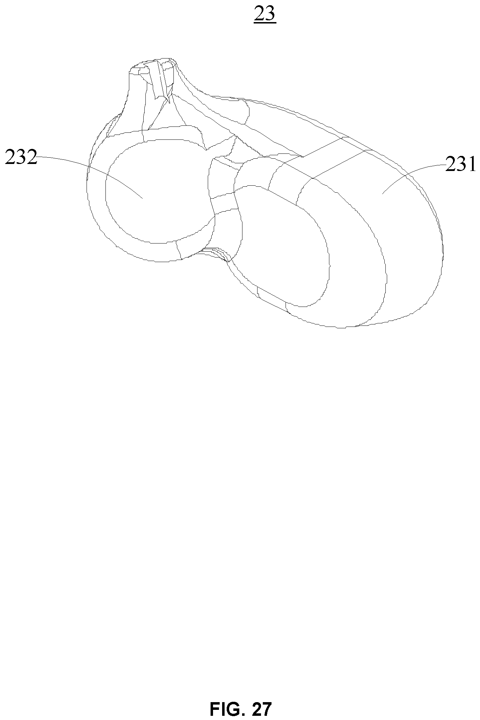

Exemplarily, referring to FIG. 26 and FIG. 27, the connecting end 232 of the holding portion 23 is bent with respect to the free end 231 such that the holding portion 23 is not planar in its entirety. In the wearing state, the connecting end 232 of the holding portion 23 is in contact with the skin around the tragus such that other regions of the holding portion 23 avoid pressing the tragus of the ear. Further, as the connecting end 232 of the holding portion 23 is bent with respect to the free end 231, and the core 24 and the battery 26 may be disposed at the free end 231 and the connecting end 232 of the holding portion 23, respectively, so that a bending point between the connecting end 232 and the free end 231 of the holding portion 23 corresponds precisely to a region between the core 24 and the battery 26.

It should be noted that for the two embodiments shown in FIG.23 to FIG.25 and FIG.26 to FIG.28, the main difference lies in the position of the connecting end 232 of the holding portion 23 in contact with the skin oof the user in the state of wearing. Specifically, in the embodiment shown in FIGs 26 to 28, the connecting end 232 is positioned closer to the upper auricular root of the ear, that is, closer to the top of the head of the user, compared to the embodiment in FIGs 23 to 25.

In addition to optimizing the holding portion 23 and the associated structures therein, optimizing the weight distribution of the earphone 20 and the clamping force provided by the earphone 20 is likewise beneficial in improving the stability of the earphone 20 during wearing.

Exemplarily, a ratio of the mass of the hook-like portion 21 and the mass of the holding portion 23 may be between 1/9 and 1/2. Preferably, the aforementioned ratio may be between 1/6.5 and 1/3.5. In this way, if other conditions (e.g., the distance between the center of gravity of the holding portion 23 and the upper auricular root of the ear and the distance between the center of mass of the holding portion 23 and the antihelix 105 of the ear) are kept unchanged, the stability of the earphone 20 during wearing may be increased by adjusting parameters such as the mass of the hook-like portion 21, the mass of the holding portion 23, or the like. When the earphone 20 is cut along the reference line RL shown in FIG. 19, one portion of the earphone 20 may be regarded as the holding portion 23, and the other portion of the earphone 20 may be regarded as the hook-like portion 21, thereby facilitating the measurement of the mass of the hook-like portion 21 and the mass of the holding portion 23, respectively.

In some embodiments, the hook-like portion 21 may include an elastic metal wire connected to the holding portion 23 and an elastic wrapping body that wraps the elastic metal wire. The elastic metal wire is primarily configured to enable the hook-like portion 21 to cooperate with the holding portion 23 to provide a corresponding clamping force, and the elastic wrapping body improves the comfort of the hook-like portion 21 during wear and its fit with the rear side of the ear (and the head). Wherein, the thickness of the elastomeric covering may be between 1 mm and 3.5 mm. Preferably, the aforementioned thickness may be between 1.5 mm and 2.5 mm. Further, the Shore hardness of the elastic wrapping body may be in a range of 0A-40A. Preferably, the aforementioned Shore hardness may be in a range of 0A-10A. Correspondingly, a material of the elastic wrapping body may be one of silicone gel, foam sponge, thermoplastic polyurethane elastomer, thermoplastic elastomer, or the like, or any combination thereof. Considering that the elastic wrapping body is in contact with the skin of the user, the material of the elastic covering body may be preferably a single silicone gel, a thermoplastic polyurethane elastomer, or a composite structure of a sponge and a silicone gel (e.g., the sponge wraps the elastic metal wire and the silicone gel wraps the sponge).

In some embodiments, the holding portion 23 may comprise a housing and an elastic overlay wrapping the housing. The housing may be configured to accommodate structural components such as the core 24, the main board 25, the battery 26, etc., and to cooperate with the hook-like portion 21 to provide the corresponding clamping force. The elastic overlay may be configured to improve the wearing comfort of the holding portion 23 and its fit with the front side of the ear. A thickness of the elastic overlay may be between 1 mm and 3.5 mm. Preferably, the aforementioned thickness may be between 1.5mm and 2.5mm. Further, a Shore hardness of the elastic overlay may be in a range of 0A-40A. Preferably, the aforementioned Shore hardness may be in a range of 0A-10A. Correspondingly, a material of the elastic overlay may be one of silicone gel, foam sponge, thermoplastic polyurethane elastomer, thermoplastic elastomer, or the like, or a combination thereof. Considering that the elastic overlay is in contact with the skin of the user, the material of the elastic overlay may be preferably a single silicone gel, a thermoplastic polyurethane elastomer, or a composite structure of a sponge and a silicone gel (e.g., the sponge wraps the housing and the silicone gel wraps the sponge). Furthermore, for the composite structure of sponge and silicone gel, the sponge may be predominantly disposed at the free end 231 of the holding portion 23 such that the holding portion 23 is in contact with the ear via the sponge and the silicone gel thereon, i.e., a region of the holding portion 23 in which the sponge is located is softer than other regions. The region of the holding portion 23 in which the sponge is located may be larger than 2 x 2 mm²; preferably, the aforementioned region may be larger than 5 x 5 mm².

Exemplarily, the clamping force exerted by the holding portion 23 and the hook-like portion 21 on the ear of the user in the wearing state may be between 0.1N and 0.5N. Preferably, the aforementioned clamping force may be between 0.15N and 0.3N. If the clamping force is too large, it is detrimental to the comfort of the earphones 20 during wearing. If the clamping force is too small, it is detrimental to the stability of the earphones 20 during wearing.

It should be noted that the clamping force described in the present disclosure may be measured through a tensiometer. For example, the earphone 20 is worn on the ear of the above-described simulator or the user, i.e., the earphone 20 is in the wearing state. The tensiometer is then fixed to the side of the holding portion 23 facing away from the ear, and the tensiometer is pulled and observed. When the side of the holding portion 23 facing the ear of the user is just separated from the skin of the user, a pull force shown on the tensiometer is read, and this pull force may be simply regarded as the clamping force.

Further, when the hook-like structure 21 projects orthogonally onto the holding portion 23 along the thickness direction of the holding portion 23, the hook-like portion 21 may partially overlap with the holding portion 23. Thus, in the wearing state, the hook-like portion 21 and the holding portion 23 press the ear from both the front side and the back side of the ear in two directions, and the aforementioned clamping force is mainly manifested as a compressive stress, which is conducive to increasing the wearing stability and comfort.

The preceding descriptions are only a part of the embodiments of the present disclosure and are not intended to limit the scope of protection of the present disclosure. Any equivalent device or equivalent process transformations utilizing the contents of the present disclosure and the accompanying drawings, or applying them directly or indirectly in other related technical fields, are similarly included in the scope of protection of the present disclosure.

## Claims

1. An earphone, comprising a core module and a hook-like structure connected to the core module, wherein
the core module has a connecting end connected to the hook-like structure and a free end not connected to the hook-like structure,
the core module is located on a front side of an ear in a wearing state and the free end extends into a cavum conchae of the ear,
at least a portion of the hook-like structure is located on a rear side of the ear in the wearing state, and
the core module and the hook-like structure jointly clamp an ear region corresponding to the cavum conchae from a front side and a rear side of the ear region.

2. The earphone of claim 1, wherein
in the wearing state, the core module has an inner side surface facing toward the ear in a thickness direction of the core module, an outer side surface facing away from the ear in the thickness direction of the core module, and a connecting surface connecting the inner side and the outer side surface, the thickness direction of the core module being defined as a direction in which the core module is close to or away from the ear when the core module is in the wearing state,
at least a portion of the connecting surface is disposed in the cavum conchae in the wearing state and forms a first contact zone with the front side of the ear region,
the hook-like structure forms a second contact zone with the rear side of the ear region in the wearing state, and
the second contact zone and the first contact zone at least partially overlap in an ear thickness direction of the ear.

3. The earphone of claim 2, wherein
the core module has a length direction and a width direction that are perpendicular to the thickness direction of the core module and orthogonal to each other,
a length of the core module in the length direction is greater than a length of the core module in the width direction, and
a positive projection of the hook-like structure on a reference plane perpendicular to the length direction partially overlaps with a positive projection of the free end of the hook-like structure on the reference plane.

4. The earphone of claim 3, wherein an overlapping region formed by the positive projection of the hook-like structure on the reference plane and the positive projection of the free end of the hook-like structure on the reference plane is located between the inner side surface and the outer side surface of the core module in the thickness direction of the core module.

5. The earphone of claim 3, wherein
the hook-like structure includes an elastic metal wire connected to the core module and a battery housing connected to an end of the elastic metal wire that is away from the core module,
a battery is provided in the battery housing, the battery being coupled to the core module, and
a positive projection of the battery housing on the reference plane partially overlapping with a positive projection of the free end of the hook-like structure on the reference plane.

6. The earphone of claim 1, wherein
the core module has a thickness direction, a length direction, and a width direction that are orthogonal to each other, the thickness direction being defined as a direction in which the core module is close to or away from the ear when the core module is in the wearing state,
a length of the core module in the length direction is greater than a length of the core module in the width direction,
the core module in the wearing state has an upper side surface facing away from an external ear canal of the ear in the width direction and a lower side surface facing toward the external ear canal of the ear in the width direction, and
an edge of a side, facing toward the core module, of a positive projection of the hook-like structure on a reference plane that is perpendicular to the thickness direction is divided into a first section and a second section with a continuous arc transition,
a dividing point between the first section and the second section is located at a position where the edge is farthest from the upper side surface of the core module in the width direction, and
an overall curvature of the hook-like structure in the first section is greater than an overall curvature of the hook-like structure in the second section.

7. The earphone of claim 6, wherein a length of the second section is greater than a length of the first section in an extension direction of the hook-like structure.

8. The earphone of claim 6, wherein
the earphone has a first reference line segment parallel to the width direction,
a starting point of the first reference line segment is a point where the first reference line segment intersects with the upper side surface,
an ending point of the first reference line segment is the dividing point, and
a length of first reference line segment is in a range of 13mm to 20mm.

9. The earphone of claim 8, wherein
a second reference line segment passing 1/4 of the first reference line segment and parallel to the length direction intersects with the first section and the second section at a first intersection point and a second intersection point, respectively, a distance between the first intersection point and the starting point of the first reference line segment is in a range of 9mm to 15mm, and a distance between the second intersection point and the starting point of the first reference line segment is in a range of 12mm to 19mm;
a third reference line segment passing 1/2 of the first reference line segment and parallel to the length direction intersects with the first section and the second section at a third intersection point and a fourth intersection point, respectively, a distance between the third intersection point and the starting point of the first reference line segment is in a range of 11mm to 18mm, and a distance between the fourth intersection point and the starting point of the first reference line segment is in a range of 12mm to 19mm; and
a fourth reference line segment passing 3/4 of the first reference line segment and parallel to the length direction intersects with the first section and the second section at a fifth intersection point and a sixth intersection point, respectively, a distance between the fifth intersection point and the starting point of the first reference line segment is in a range of 12mm to 19mm, and a distance between the sixth intersection point and the starting point of the first reference line segment is in a range of 12mm to 19mm.

10. The earphone of claim 6, wherein
the core module has a rear side surface connecting the upper side surface and the lower side surface,
the rear side surface is located at an end of the core module that faces a rear side of a head in the length direction when the core module is in the wearing state and at least partially located in the cavum conchae, and
a fifth reference line segment with a shortest distance in the length direction is formed between the second section and the rear side surface, a length of the fifth reference line segment being in a range of 2 mm to 3 mm.

11. The earphone of claim 10, wherein a point where the fifth reference line segment intersects with the rear side surface is designated as a starting point of the fifth reference line segment, and a point where the fifth reference line segment intersects with the second section is designated as an end point of the fifth reference line segment; wherein
the earphone has a first reference line segment parallel to the width direction, a starting point of the first reference line segment being a point where the first reference line segment intersects with the upper side surface, an end point of the first reference line segment being the dividing point,
a positive projection of the starting point of the first reference line segment along the length direction of the core module intersects with the second section at a seventh intersection point,
a positive projection of an intersection point of a reverse extension line of the first reference line segment and the lower side surface along the length direction intersects with the second section at an eighth intersection point,
a distance between the seventh intersection point and the starting point of the fifth reference line segment is in a range of 5mm and 9mm, and
a distance between the eighth intersection point and the starting point of the fifth reference line segment is in a range of 5mm to 9mm.

12. The earphone of claim 1, wherein
the core module has a thickness direction, a length direction, and a width direction that are orthogonal to each other, the thickness direction being defined as a direction in which the core module is close to or away from the ear when the core module is in the wearing state,
a length of the core module in the length direction is greater than a width of the core module in the width direction,
in the wearing state and viewed along a direction of a coronal axis of a human body, the connecting end is closer to a top of a head than the free end, and
an angle between the length direction and a direction of a sagittal axis of the human body is in a range of 15° to 60°.

13. The earphone of claim 1, wherein
the core module includes a core housing connected with the hook-like structure and a speaker provided in the core housing,
an inner side surface of the core housing facing the ear when the core module is in the wearing state is provided with an acoustic outlet hole, a sound wave generated by the speaker propagating out through the core housing, and
the core module in the wearing state cooperates with the cavum conchae to form an auxiliary cavity in communication with an external ear canal of the ear, the acoustic outlet hole being at least partially disposed in the auxiliary cavity.

14. The earphone of claim 13, wherein the auxiliary cavity is configured as a semi-open cavity.

15. The earphone of claim 13, wherein
the core module includes a flexible embedding block disposed outside of the core housing, a hardness of the flexible embedding block being less than a hardness of the core housing,
the flexible embedding block covers a local region of the core housing corresponding to the free end, and
the flexible embedding block acts as a cushion when the core module abuts against the ear region.

16. The earphone of claim 15, wherein
the core module has a thickness direction, a length direction, and a width direction that are orthogonal to each other, the thickness direction being defined as a direction in which the core module is close to or away from the ear when the core module is in the wearing state,
a length of the core module in the length direction is greater than a width of the core module in the width direction,
the core module in the wearing state has an upper side surface facing away from the external ear canal of the ear in the width direction, a lower side surface facing toward the external ear canal of the ear in the width direction, and a rear side surface that connects the upper side surface and the lower side surface,
the rear side surface faces a rear side of a head in the length direction when the core module is in the wearing state and located in the cavum conchae,
the flexible embedding block continuously overlies at least a portion of the core housing corresponding to the rear side surface, the upper side surface, and the lower side surface.

17. The earphone of claim 16, wherein the flexible embedding block is configured as a U-shape when viewed in the thickness direction.

18. The earphone of claim 16, wherein a portion of the flexible embedding block corresponding to the lower side surface abuts against an antitragus of the ear.
